# EUROPEAN PATENT SPECIFICATION

(11) **EP 3 944 229 B1**
(45) Date of publication and mention of the grant of the patent: **06.08.2025**
(21) Application number: 19920759.8
(22) Date of filing: 05.09.2019
(51) Int. Cl.: G10K 11/16, B32B 5/24, B32B 7/02, G10K 11/168, B32B 5/02, B32B 5/18, B32B 5/26, B32B 7/022, B60R 13/08

(54) **LAMINATED SOUND ABSORBING MATERIAL**
LAMINIERTES SCHALLABSORBIERENDES MATERIAL
MATÉRIAU ABSORBANT ACOUSTIQUE STRATIFIÉ

(30) Priority: 22.03.2019 JP 2019054647
(43) Date of publication of application: 26.01.2022
(73) Proprietor: JNC Corporation, Chiyoda-ku Tokyo 100-8105 (JP); JNC Fibers Corporation, Tokyo 100-0004 (JP)
(72) Inventor: HATTORI, Takayuki, Moriyama-shi, Shiga 524-0001 (JP); ITO, Hidemi, Moriyama-shi, Shiga 524-0001 (JP)
(74) Representative: Becker, Eberhard
(86) International application number: PCT/JP2019/035016
(87) International publication number: WO 2020/194788

(56) References cited:
- EP-A1- 3 269 860
- WO-A1-2016/143857
- WO-A2-2014/150336
- JP-A- 2012 073 620
- US-A1- 2005 026 527
- US-A1- 2006 065 482
- US-A1- 2014 272 318

## Description

### [Technical Field]

The present invention relates to a sound absorbing material having a laminated structure in which two or more types of layers are laminated.

### [Background Art]

A sound absorbing material is a product having a function of absorbing sound and is widely used in the fields of construction and automobiles. Use of a nonwoven fabric as a material constituting a sound absorbing material is known. For example, JP 2014-015042 A discloses that a support body layer and a submicron fiber layer laminated on the support body layer are included as a multilayer article having a sound absorbing property, in which the submicron fiber layer has a central fiber diameter of less than 1 µm and an average fiber diameter in a range of 0.5 to 0.7 µm and is formed by a molten film fibrillation method or an electrospinning method. An example of JP 2014-015042 A discloses a laminated article in which a polypropylene spunbonded nonwoven fabric having a basis weight (basis weight) of 100 g/m² and a diameter of about 18 µm is used as a support body layer, and a submicron polypropylene fiber having a basis weight of 14 to 50 g/m² and an average fiber diameter of about 0.56 µm is laminated thereon. Also, another example discloses a multilayer article in which electrospun polycaprolactone fibers having a basis weight of 6 to 32 g/m² and an average fiber diameter of 0.60 µm are laminated on a polyester card-treated web having a basis weight of 62 g/m². The multilayer articles produced in the examples have been measured for sound absorption characteristics, and this has shown that the sound absorption characteristics are superior to sound absorption characteristics of the support body alone.

Use of a foamed body as a sound absorbing material is also known. For example, JP 2014-529524 A discloses a laminated structure for improving acoustic comfort (reducing and optimizing sound reflection components) and thermal comfort including an organic polymer foamed body having an open porosity in a specific range as a support layer, a glass fabric having specific permeability resistance as a surface layer, and a discontinuous adhesive layer between the support layer and the surface layer. It is disclosed that examples of the organic polymer foamed body include polyurethane, particularly polyester urethane, neoprene (registered trademark), and those using silicone or melamine as a basic material, and a density thereof is preferably 10 to 120 kg/m³ and a thickness is preferably 1.5 to 2.5 mm.

JP 2016-137636 A discloses a multilayer sheet used as an insulator for automobiles. The multilayer sheet of JP 2016-137636 A is one in which a first porous sheet and a second porous sheet are fused and integrated by polypropylene melt-blown nonwoven fabrics inserted therebetween. Short-fiber adhesive entangled nonwoven fabric sheets, glass wool mat sheets, and the like are exemplified as the first porous sheet and the second porous sheet, dense polypropylene melt-blown nonwoven fabrics with low air permeability are inserted therebetween, and when the melt-blown nonwoven fabrics with an average fiber diameter of 2 µm or less are used, it is thought that the fibers can be uniformly dispersed and a physical property of the low air permeability of the melt-blown nonwoven fabrics can be inherited even when they are melted during molding.

WO 2014/150336 A1 relates to nonwoven structures and composites comprising such nonwoven structures, particularly structures incorporating foam, and methods of making and use thereof. One aspect of the document is directed to composites comprising a nonwoven structure immobilized to foam, e.g., using adhesive, needling, or other techniques. The nonwoven structure may comprise any of a variety of fibers. Other aspects of the document are generally directed to systems and methods for making such composites, methods of use of such composites, and kits comprising such composites Patent document US 2014/272318 discloses a sound absorbing material comprising a fiber layer and a porous layer, and suggests that the air permeability of the fiber layer should not exceed 50.8 cc/cm².s (100ft³/min·ft²).

### [Summary of Invention]

### [Technical Problem]

As described above, laminates with various configurations have been studied as sound absorbing materials, and combining a plurality of layers having different fiber diameters and air permeabilities (densities) is also known. On the other hand, particularly in a sound absorbing material for automobiles, there is a demand for a sound absorbing material having better sound absorption characteristics, particularly a sound absorbing material that exhibits excellent sound absorbing performance in a low-frequency range of 1000 Hz or less, an intermediate-frequency range of 1600 to 2500 Hz, and a high-frequency range of 5000 to 10000 Hz and has an excellent space-saving property. In view of this situation, an objective of the present invention is to provide a sound absorbing material having an excellent sound absorbing property in a low-frequency range, an intermediate-frequency range, and preferably a higher frequency range.

### [Solution to Problem]

The inventors conducted intensive research to solve the above-described problems. As a result, they found that the above-described problems can be solved when a laminated sound absorbing material including a porous layer and a fiber layer is made to have a structure including a dense fiber layer having a mean flow pore size in a specific range and an air permeability in a specific range, and a sparse porous layer having a constant thickness and density and formed of at least one selected from the group consisting of a foamed resin, a nonwoven fabric, and a woven fabric, and thus completed the present invention.

The present invention refers to a laminated sound absorbing material according to claim 1.

Other advantageous embodiments are defined in the dependent claims. 56

### [Advantageous Effects of Invention]

According to the present invention having the above-described configurations, when a fiber layer and a porous layer having a specific configuration are included in the laminated sound absorbing material, a high sound absorbing property can be realized with a small number of layers, and a thickness of a sound absorbing material can be reduced. Also, according to the present invention having the above-described configurations, a sound absorbing material having excellent sound absorbing characteristics can be obtained in a low-frequency range, an intermediate-frequency range, and preferably a higher frequency range. The laminated sound absorbing material of the present invention is excellent in sound absorbing performance in a range in which a peak of sound absorbing characteristics is lower than that of a conventional sound absorbing material, that is, in a range of 2000 Hz or less and particularly in a range of 1000 Hz or less. In the field of construction, it is reported that most of daily life noise is about 200 to 500 Hz, and in the field of automobiles, it is reported that road noise is about 100 to 500 Hz, noise during acceleration or a transmission change is about 100 to 2000 Hz, and wind noise during vehicle traveling is about 800 to 2000 Hz. The laminated sound absorbing material of the present invention is useful for a countermeasure against such noise. Also, since the laminated sound absorbing material of the present invention is lighter than a sound absorbing material made of a porous material, a glass fiber, or the like, weight reduction and space saving of the member is possible, and it is particularly useful as a sound absorbing material for the field of automobiles in this respect.

### [Brief Description of Drawings]

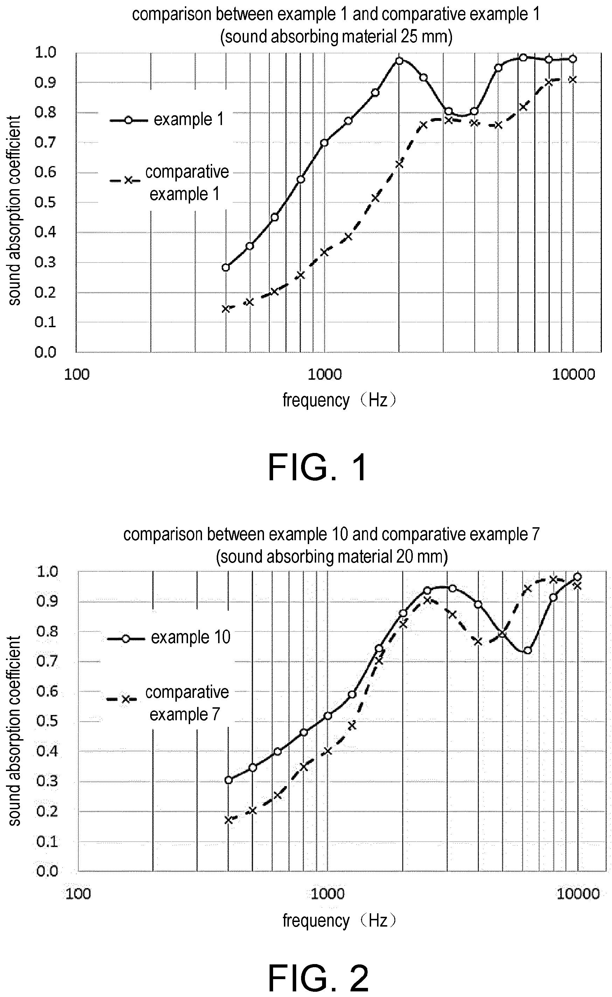

Fig. 1 is a graph showing sound absorption characteristics of an example (example 1) of the present invention and comparative example 1.
Fig. 2 is a graph showing sound absorption characteristics of an example (example 10) of the present invention and comparative example 7.

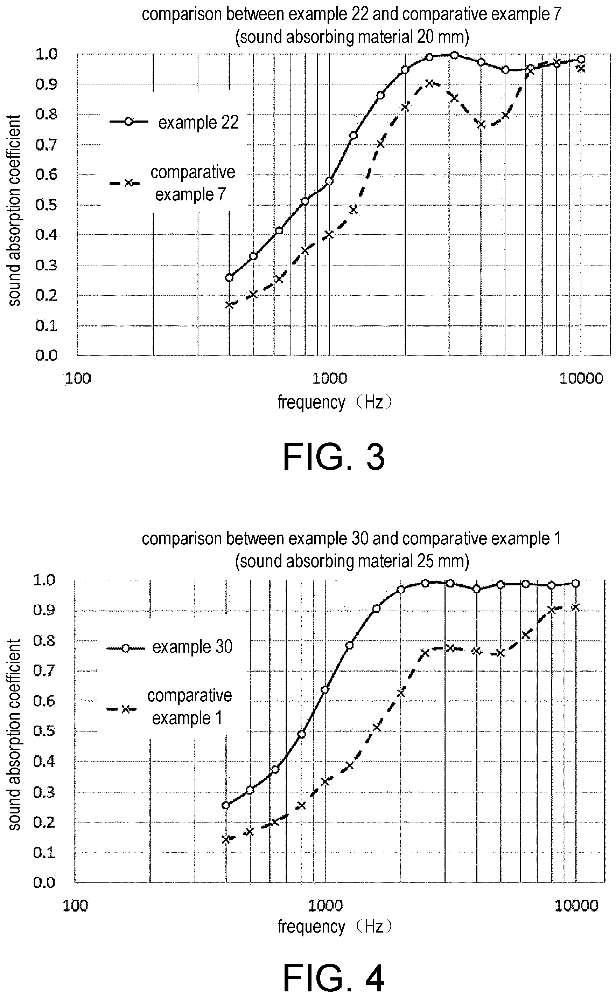

Fig. 3 is a graph showing sound absorption characteristics of an example (example 22) of the present invention and comparative example 7.
Fig. 4 is a graph showing sound absorption characteristics of an example (example 30) of the present invention and comparative example 1.

### [Description of Embodiments]

Hereinafter, the present invention will be described in detail.

### (Structure of laminated sound absorbing material)

A laminated sound absorbing material of the present invention is a laminated sound absorbing material including at least a fiber layer and a porous layer, in which the fiber layer has a mean flow pore size of 1.0 to 60 µm and an air permeability of 56 to 220 cc/cm²·s by the Frazier method, the porous layer is a layer formed of at least one selected from the group consisting of a foamed resin, a nonwoven fabric, and a woven fabric and has a thickness of 3 to 40 mm and a density which is lower than that of the fiber layer and is 3 to 50 kg/m³, and the fiber layer is disposed on a sound incidence side.

In the laminated sound absorbing material, at least one fiber layer is included, and specifically, one or two layers can be included, but one layer is more preferable from the perspective of reducing a thickness of the sound absorbing material. Each fiber layer may be formed of one fiber aggregate or may have a form in which a plurality of fiber aggregates is overlapped in one fiber layer. Also, in the laminated sound absorbing material, at least one fiber layer is disposed on a sound incidence side.

The fiber layer and the porous layer included in the laminated sound absorbing material may be one type each but may be two or more different types of fiber layers or porous layers. Also, as long as the effects of the present invention are not impaired, a constituent other than the fiber layer and the porous layer may be included, and for example, an additional fiber layer (one layer or two or more layers), a printing layer, a foamed body, a foil, a mesh, a woven fabric, or the like outside the range specified in the present invention may be included. Also, an adhesive layer, a clip, a suture thread, or the like for connecting each layer may be included.

The laminated sound absorbing material of the present invention may be a two-layer laminate in which a fiber layer is disposed on a sound incidence side and a porous layer is disposed on a sound transmission side, may be a three-layer laminate in which a porous layer is sandwiched between a first fiber layer and a second fiber layer, or may be a four-layer laminate in which a first fiber layer/a first porous layer/a second fiber layer/a second porous layer are laminated in that order. When two fiber layers are included, a first fiber layer and a second fiber layer may have densities that are the same as or different from each other. When the densities are different from each other, the second fiber layer positioned on the sound transmission side preferably has a higher density than the first fiber layer. When two porous layers are included, a first porous layer and a second porous layer may have densities that are the same as or different from each other. When the densities are different from each other, the second porous layer positioned on a sound transmission side preferably has a higher density than the first porous layer.

Spaces between layers of the laminated sound absorbing material may or may not be physically and/or chemically adhered. The laminated sound absorbing material may have a form in which a part between the plurality of layers is adhered and a part therebetween is not adhered. In regard to adhesion, the fiber layer and the porous layer may be adhered by performing heating to melt some of the fibers constituting the fiber layer and fusing the fiber layer to the porous layer, for example, in a step of forming the fiber layer or as a post-step. It is also preferable to adhere the layers by applying an adhesive to a surface of the porous layer or the fiber layer and then overlapping the porous layer or the fiber layer thereon.

A thickness of the laminated sound absorbing material is not particularly limited as long as the effects of the present invention can be obtained, but can be, for example, 3 to 50 mm, preferably 3 to 40 mm, and more preferably 3 to 30 mm from the perspective of a space-saving property. Further, the thickness of the laminated sound absorbing material is typically a total thickness of the fiber layer and the porous layer, and when an exterior body such as a cartridge or a lid is attached, a thickness of that portion is not included therein.

An air permeability of the laminated sound absorbing material is not particularly limited as long as desired sound absorbing performance can be obtained, the air permeability of the fiber layer is 56 to 220 cc/cm²·s. When the air permeability is 30 cc/cm²·s or more, there is no decrease in sound absorption coefficient due to sound reflection on a surface of the sound absorbing material, and when the air permeability is 500 cc/cm²·s or less, tortuosity inside the sound absorbing material decreases and there is no decrease in energy loss inside the sound absorbing material. Also, a density of the fiber layer is higher than a density of the porous layer, in other words, a structure is obtained of in which a layer having a relatively low density (porous layer) is positioned on a sound transmission side with respect to a layer having a high density (fiber layer) or is sandwiched between the fiber layers. Conventionally, in a sound absorbing material that is expected to have sound insulating performance as well as sound absorbing performance, it has been thought that a higher density would make it more difficult for a sound to pass through, that is, more effective for a sound insulating property, but the laminated sound absorbing material of the present invention reduces sound reflection by having high air permeability, and furthermore, can obtain a high sound absorbing property by employing a porous layer having an excellent sound absorbing property. To adjust the air permeability, a fiber layer having a high density and low air permeability can be obtained by, for example, making fibers constituting the fiber layer small in diameter. The air permeability can also be adjusted by a method such as embossing or heating and pressurizing. Further, the air permeability can be measured by a known method, for example, by the Frazier method.

The laminated sound absorbing material has a laminated structure in which the porous layer is positioned downstream (sound transmission side) of the fiber layer, or the porous layer is sandwiched between the fiber layers. When the porous layer is sandwiched between the fiber layers, a distance between the fiber layers (also referred to as a thickness of the porous layer or an interlayer distance) is 3 to 40 mm. When the interlayer distance is 3 mm or more, sound absorbing performance in a low-frequency range is satisfactory, and when the interlayer distance is 40 mm or less, a thickness of the sound absorbing material does not become too large and a sound absorbing material having an excellent space-saving property can be obtained. Typically, the sound absorbing material of the present invention preferably has a structure in which a thick porous layer is sandwiched between thin fiber layers, and a thickness of the porous layer preferably occupies most of the thickness of the laminated sound absorbing material.

### (Structure of each layer: Fiber layer)

The fiber layer included in the laminated sound absorbing material of the present invention is a layer formed of fibers having an average fiber diameter of 30 nm to 30 µm. The layer is preferably formed of fibers having an average fiber diameter of 50 nm to 30 µm. The average fiber diameter of 30 nm to 30 µm means that the average fiber diameter is within this numerical range. When the fiber diameter is in the range of 30 nm to 30 µm, this is preferable because a high sound absorbing property can be obtained. The fiber diameter can be measured by a known method. For example, the fiber diameter is a value obtained by measuring or calculating from an enlarged image of a surface of the fiber layer, and a detailed measurement method is described in detail in examples.

In the fiber layer included in the laminated sound absorbing material of the present invention, one fiber layer may be formed of one fiber aggregate, and one in which a plurality of fiber aggregates is included in one fiber layer and layers of the fiber aggregates are overlapped may form one fiber layer. Further, in the present specification, the fiber aggregate is a fiber aggregate which is configured as one continuum. A basis weight of the fiber layer is preferably 0.01 to 500 g/m², and more preferably 0.1 to 200 g/m². When the basis weight is 0.1 g/m² or more, control of flow resistance due to a density difference between the fiber layer and the porous layer is satisfactory, and when the basis weight is less than 500 g/m², the productivity as a sound absorbing material is excellent. From the perspective of reducing a thickness of the sound absorbing material, a thickness of the fiber layer is preferably thin, specifically, preferably less than 2.9 mm, more preferably less than 2.0 mm, still more preferably less than 1.5 mm, and particularly preferably less than 1 mm.

An air permeability of the fiber layer is 56 to 220 cc/cm²·s. It is thought that, when the air permeability is 30 cc/cm²·s or more, sound generated from a sound source can be introduced into the sound absorbing material, and thus the sound can be efficiently absorbed, and when the air permeability is 220 cc/cm²·s or less, a flow of sound waves with respect to the porous layer inside can be adjusted, and thus this is preferable. Also, a mean flow pore size of the fiber layer is 1.0 to 60 µm. When the mean flow pore size is 1.0 µm or more, a reflected wave to be able to be suppressed and the sound to be able to be taken into the sound absorbing material, and when the mean flow pore size is 100 µm or less, the sound can be efficiently eliminated inside the sound absorbing material by confining the sound inside the sound absorbing material in the fiber layer and the porous layer controlled by the density.

The fiber aggregate constituting the fiber layer is preferably a nonwoven fabric and is not particularly limited as long as a fiber diameter and a basis weight thereof are in the range described above, but is preferably a spunbonded nonwoven fabric, a melt-blown nonwoven fabric, a nonwoven fabric formed by an electrospinning method, or the like. According to the melt-blown nonwoven fabric, fibers having a small diameter can be efficiently laminated on another member such as a base material. Details of the melt-blown nonwoven fabric will be described in description of the manufacturing method.

A resin constituting the fiber layer is not particularly limited as long as the effects of the invention can be obtained, and examples thereof include a polyolefin-based resin, polyurethane, polylactic acid, an acrylic resin, polyesters such as polyethylene terephthalate and polybutylene terephthalate, nylons (amide resins) such as nylon 6, nylon 6,6, and nylon 1,2, polyphenylene sulfide, polyvinyl alcohol, polystyrene, polysulfone, liquid crystal polymers, a polyethylene-vinyl acetate copolymer, polyacrylonitrile, polyvinylidene fluoride, polyvinylidene fluoride-hexafluoropropylene, and the like. As the polyolefin-based resin, a polyethylene resin and a polypropylene resin can be exemplified. As the polyethylene resin, low-density polyethylene (LDPE), high-density polyethylene (HDPE), linear low-density polyethylene (LLDPE), and the like can be exemplified, and as the polypropylene resin, a propylene homopolymer, a polypropylene copolymer in which propylene and other monomers and ethylene, butene, or the like are polymerized, and the like can be exemplified. The fiber aggregate preferably contains one type of the above-described resins and may also include two or more types.

Also, the fiber layer is preferably a spunbonded nonwoven fabric using flat yarn in which a cross-sectional shape of the fiber is flat. Specifically, for example, a spunbonded nonwoven fabric using flat yarn having a denier of 0.01 to 20 dtex such as a polyolefin-based resin (polypropylene, polyethylene), polyethylene terephthalate, and nylon may be prepared and used as the flat yarn, and a product available on the market can also be used. When a product available on the market is used, for example, Eltas FLAT, Eltas Emboss (trade name, manufactured by Asahi Kasei Corporation), or the like can be preferably used. It is thought that the spunbonded nonwoven fabric using flat yarn can be preferably used for the laminated sound absorbing material of the present invention due to its low basis weight, small thickness, and high density.

Also, the above-described fiber may contain additives of various types other than a resin. As additives that can be added to a resin, for example, a filler, a stabilizer, a plasticizer, a pressure-sensitive adhesive, an adhesion promoter (for example, silane and titanate), silica, glass, clay, talc, a pigment, a colorant, an antioxidant, a fluorescent whitening agent, an antibacterial agent, a surfactant, a flame retardant, and a fluoropolymer can be exemplified. Using one or more of the above-described additives, a weight and/or costs of the fibers and layers to be obtained may be reduced, viscosity may be adjusted, thermal properties of the fibers may be modified, or activation of various physical properties derived from properties of the additives including electrical properties, optical properties, properties related to a density, or properties related to a liquid barrier or adhesiveness may be imparted.

### (Structure of each layer: Porous layer)

The porous layer in the laminated sound absorbing material of the present invention has a sound absorbing property and a function of keeping a shape of the entire sound absorbing material by supporting the fiber layer. The porous layer may be formed of one porous layer or may be in a form in which a plurality of porous layers is overlapped. The porous layer has a density lower than that of the fiber layer by the Frazier method, is a layer formed of at least one selected from the group consisting of a foamed resin, a nonwoven fabric, and a woven fabric, and has a thickness of 3 to 40 mm and a density of 3 to 50 kg/m³.

When a member constituting the porous layer is a nonwoven fabric or a woven fabric, the nonwoven fabric or the woven fabric is preferably formed of at least a fiber of one type selected from the group consisting of a polyethylene phthalate fiber, a polybutylene terephthalate fiber, a polyethylene fiber, a polypropylene fiber, and a glass fiber, or formed of a composite fiber in which two or more types thereof are composited.

When the member constituting the porous layer is a foamed resin, the porous layer is particularly preferably a layer formed of a urethane foam resin or a melamine foam resin. The laminated sound absorbing material may include a member of one type and preferably includes members of two or more types. Since it is particularly preferable that these have air permeability, it is preferable to have open pores when the air permeability is low. The foamed resin is preferably a foamed resin having open cells (communicating pores).

As a resin constituting the above-described foamed resin, for example, a polyolefin-based resin, a polyurethane-based resin, and a melamine-based resin can be exemplified. As the polyolefin-based resin, a homopolymer such as ethylene, propylene, butene-1, 4-methylpentene-1, or the like, a random or block copolymer of these with other α-olefins, that is, with one or more of ethylene, propylene, butene-1, pentene-1, hexene-1, 4-methylpentene-1, and the like, a copolymer obtained by combining them, or a mixture thereof can be exemplified.

In the laminated sound absorbing material of the present invention, the porous layer is positioned downstream of the fiber layer (sound transmission side) or is positioned between the fiber layers. In addition to being positioned between the fiber layers, the porous layer may also be included as a layer positioned on an outermost surface of the laminated sound absorbing material. The member may form the porous layer with only one layer, and it is also preferable that two or more layers be continuously disposed to form one porous layer. When two or more layers of the member are continuously disposed, there is an advantage that an interlayer distance of the layer can be controlled by a thickness of the porous layer.

A density of the porous layer is 3 to 50 kg/m³ and preferably 6 to 45 kg/m³. As the foamed resin layer, a foamed resin layer having open cells (communicating pores) is preferable, and examples thereof include a urethane foam resin, an acrylic-based foam resin, a melamine foam resin, and the like. When the density is 3 kg/m³ or more, it is preferable in terms of good moldability and being easily obtainable due to being available on the market generally, and when the density is 50 kg/m³ or less, it is preferable because it is lightweight as the sound absorbing material and has high workability during installation or the like.

In the present invention, the porous layer has a thickness of 3 mm or more. An upper limit of the thickness of the porous layer is 3 to 40 mm. When the porous layer is constituted by a plurality of members, a thickness of each member constituting the porous layer can be, 3 mm to 40 mm. When a thickness of the member is 20 µm or more, wrinkles do not occur, handling is easy, and the productivity is satisfactory, and when the thickness of the member is 60 mm or less, there is no likelihood of hindering the space-saving property.

The porous layer is a thicker layer having a lower density than the fiber layer, and it is thought that such a structure reduces sound reflection and contributes to a sound absorbing property. An air permeability of the porous layer can be, for example, 10 cc/cm²·s or more.

Additives of various types such as, for example, a colorant, an antioxidant, a light stabilizer, an ultraviolet absorbing agent, a neutralizer, a nucleating agent, a lubricant, an antibacterial agent, a flame retardant, a plasticizer, other thermoplastic resins, and the like may be added to the porous layer within a range not hindering the effects of the present invention. Also, a surface thereof may be treated with finishing agents of various types, and thereby functions such as water repellency, an antistatic property, surface smoothness, wear resistance, and the like may be imparted.

### (Sound absorption characteristics of laminated sound absorbing material)

The laminated sound absorbing material of the present invention has a feature of having an excellent sound absorbing property particularly in a low-frequency range (frequency range of 500 to 1000 Hz or less), an intermediate-frequency range (frequency range of 1600 to 2500 Hz), and preferably a higher frequency range (frequency range of 5000 to 10000 Hz). The laminated sound absorbing material of the present invention exhibits sound absorbing characteristics different from those of conventional sound absorbing materials in that the sound absorbing property is excellent particularly in the range of 500 Hz to 1000 Hz. Although not bound by a particular theory, it is thought that the laminated sound absorbing material of the present invention can obtain a small thickness and a performance of having excellent absorbency in the low-frequency range, the intermediate-frequency range, and the high-frequency range as a result of utilizing a density difference between the fiber layer and the porous layer to control flow resistance of sound waves and utilizing transmission, reflection, and interference of the sound waves.

A method for evaluating the sound absorption property will be described in detail in examples.

In the laminated sound absorbing material of the present invention, it is preferable that a sound absorption coefficient by a vertical incidence sound absorption coefficient measuring method at the frequency of 500 to 1000 Hz be improved by 0.03 or more compared to a sound absorption coefficient of a case in which only one porous layer is included in the laminated sound absorbing material. Also, in the laminated sound absorbing material of the present invention, it is preferable that a sound absorption coefficient by the vertical incidence sound absorption coefficient measuring method at the frequency of 1600 to 2500 Hz be improved by 0.03 or more compared to the sound absorption coefficient of the case in which only one porous layer is included in the laminated sound absorbing material. Further, in the laminated sound absorbing material of the present invention, it is preferable that a sound absorption coefficient by the vertical incidence sound absorption coefficient measuring method at the frequency of 5000 to 10000 Hz be improved by 0.03 or more compared to the sound absorption coefficient of the case in which only one porous layer is included in the laminated sound absorbing material.

### (Method of manufacturing laminated sound absorbing material)

A method of manufacturing the laminated sound absorbing material is not particularly limited, but can be obtained by a manufacturing method including, for example, a step of preparing a fiber layer that forms a fiber aggregate of one layer on one porous layer, and a step of overlapping and integrating a predetermined number of a plurality of fiber layers in a predetermined order. In the step of overlapping the fiber layers, an additional layer (for example, an additional protective layer) other than the fiber layers can be further added and laminated.

A foamed resin, a nonwoven fabric, and/or a woven fabric used as the porous layer may be manufactured by a known method and used, or a product available on the market may be selected and used.

A method of overlapping and integrating a plurality of laminates formed of two layers of the porous layer/the fiber layer obtained as described above is not particularly limited and may be simple overlapping without performing adhesion, and adhesion methods of various types, that is, thermo-compression bonding with a heated flat roll or embossed roll, adhesion with a hot melt agent or a chemical adhesive, thermal adhesion with circulating hot air or radiant heat, and the like can also be employed. Of these, a heat treatment with circulating hot air or radiant heat is particularly preferable from the perspective of suppressing deterioration of physical properties of the fiber layer. In a case of the thermo-compression bonding with a flat roll or embossed roll, deterioration in performance such as deterioration of sound absorption characteristics is likely to occur and stable manufacture is likely to be difficult because of damage such as the fiber layer being melted to form a film and tearing occurring at a portion near an embossed point. Also, in a case of the adhesion with a hot melt agent or a chemical adhesive, spaces between fibers of the fiber layer may be filled with components thereof, and deterioration in performance is likely to occur. On the other hand, integration by the heat treatment with circulating hot air or radiant heat is preferable because damage to the fiber layer is small and integration can be performed with a sufficient delamination strength. In the case of integration by the heat treatment with circulating hot air or radiant heat, although not particularly limited, it is preferable to use a nonwoven fabric and a foamed resin made of heat-fusible composite fibers.

### Examples

Hereinafter, the present invention will be described in more detail using examples, but the following examples are merely for the purpose of exemplification. The scope of the present invention is not limited to the present examples.

Measurement methods and definitions of physical property values used in the examples are described below.

### <Average fiber diameter>

Fibers were observed using a scanning electron microscope SU8020 manufactured by Hitachi High-Technologies Corporation, and diameters of 50 fibers were measured using image analysis software. An average value of the fiber diameters of the 50 fibers was taken as an average fiber diameter.

### <Sound absorption coefficient measurement 1>

After taking a sample with a diameter of 15 mm from each fiber layer and porous layer and laminating them under each condition, a vertical incidence sound absorption coefficient measurement when a plane sound wave was vertically incident on a test piece at a frequency of 400 to 10000 Hz was performed in accordance with ASTM E 1050 using a vertical incidence sound absorption coefficient measuring device "WinZac MTX manufactured by Nihon Onkyo Engineering Co., Ltd."

### <Sound absorbing property in low-frequency range>

A sound absorption coefficient was measured in one-third octave band of sound absorption of the obtained sample, and an improvement range was evaluated by a comparative evaluation with a sample without the fiber layer. The vertical incidence sound absorption coefficient of each sample was measured in the 1/3 octave band, and an evaluation was performed by calculating a difference. When an improvement range of the sound absorbing performance in the frequency range of 500 to 1000 Hz is shown, it is determined that the improvement range of the sound absorbing property is high when the numerical value is high. When the values were 0.03 or more at all measurement points (specifically, 500 Hz, 630 Hz, 800 Hz, 1000 Hz), the improvement of the sound absorbing property in the low-frequency range was evaluated as satisfactory (O), and when there was a measurement point less than 0.03, the improvement of the sound absorbing property was evaluated as poor (x).

### <Sound absorbing property in intermediate-frequency range>

An evaluation was performed in the same manner as the sound absorbing property in the low-frequency range except that the frequency range evaluated in the low-frequency range was changed to 1600 to 2500 Hz, and calculation of the improvement range was performed at 1600 Hz, 2000 Hz, and 2500 Hz.

### <Sound absorbing property in high-frequency range>

An evaluation was performed in the same manner as the sound absorbing property in the low-frequency range except that the frequency range evaluated in the low-frequency range was changed to 5000 to 10000 Hz, and calculation of the improvement range was performed at 5000 Hz, 6300 Hz, 8000 Hz, and 10000 Hz.

### <Air permeability>

An air permeability was measured by a woven fabric air permeability tester (Frazier method) manufactured by Toyo Seiki Seisaku-sho Ltd. in accordance with JIS L1913.

### <Thickness>

A thickness was measured by DIGI THICKNESS TESTER manufactured by Toyo Seiki Seisaku-sho Ltd. in accordance with JIS K6767 at a pressure of 3.5 g/cm² of 35 mm.

### <MFR>

An MFR of a polypropylene resin is a value measured at 230°C under a load condition of 2160 g in accordance with JIS K 7210 (1999).

An MFR of a polyethylene resin is a value measured at 190°C under a load condition of 2160 g in accordance with JIS K 7210 (1999).

### <Preparation of protective layer>

As a protective layer, a commercially available card method through-air nonwoven fabric (with a basis weight of 18 g/m² and a thickness of 60 µm) made of polyethylene terephthalate was prepared.

### <Preparation of fiber layer>

### Fiber layers A, B, C

Kynar (trade name) 3120, which was polyvinylidene fluoride-hexafluoropropylene (hereinafter abbreviated as "PVDF-HFP"), manufactured by Arkema was dissolved in a co-solvent of N, N-dimethylacetamide and acetone (60/40 (w/w)) at a concentration of 15% by mass to prepare an electrospinning solution, and 0.01% by mass of a conductive auxiliary agent was added. The PVDF-HFP solution was electrospun on the protective layer to prepare a fiber laminate formed of two layers of the protective layer and PVDF-HFP ultrafine fibers. Conditions for the electrospinning were that a 24 G needle was used, a single-hole solution supply amount was 3.0 mL/h, an applied voltage was 35 kV, and a spinning distance was 17.5 cm.

For the PVDF ultrafine fibers in the fiber laminate, a basis weight of the layer was 0.2 g/m², an average fiber diameter was 80 nm, and a melting temperature was 168°C. This was defined as a fiber layer A. A mean flow pore size thereof was evaluated to be 5.8 µm, and an air permeability by the Frazier method was 47 cc/cm²·s.

Also, a transfer speed of the protective layer was changed so that the basis weight was adjusted to 0.6 g/m². An average fiber diameter of the obtained fiber layer was 80 nm, and the melting temperature was 168°C. This was defined as a fiber layer B. A mean flow pore size was evaluated to be 1.5 µm, and an air permeability by the Frazier method was 10 cc/cm²·s.

Further, the basis weight was adjusted to 3.0 g/m². At this time, the average fiber diameter was 80 nm and the melting temperature was 168°C. This was defined as a fiber layer C. A mean flow pore size was evaluated to be 0.7 µm, and an air permeability by the Frazier method was 0.7 cc/cm²·s.

### Fiber layers D, E, F, G, H, I, J, K (spunbonded nonwoven fabric)

As nonwoven fabric materials available on the market, Asahi Kasei ELTAS (registered trademark) FLAT EH5025 (thickness 0.11 mm) was used as a fiber layer D, EH5035 (thickness 0.14 mm) was used as a fiber layer E, EH5035C (thickness 0.06 mm) was used as a fiber F, ELTAS E01100 (thickness 0.44 mm) was used as a fiber layer G, E05030 (thickness 0.15 mm) was used as a fiber layer H, E01030 (thickness 0.20 mm) was used as a fiber layer I, E01025 (thickness 0.17 mm) was used as a fiber layer J, and EH5045C (thickness 0.07 mm) was used as a fiber layer K. Further, the fiber layers D, E, and F were spunbonded nonwoven fabrics using flat yarn, a fiber diameter of the fibers had a major axis diameter of 40 µm and a minor axis diameter of 5 µm of an ellipse, and the fiber layer D had a mean flow pore size of 41 µm and an air permeability of 138 cc/cm²·s by the Frazier method. The fiber layer E had a mean flow pore size of 28 µm and an air permeability of 70 cc/cm²·s by the Frazier method. The fiber layer F had a mean flow pore size of 18 µm and an air permeability of 22 cc/cm²·s by the Frazier method.

### Fiber layer M (melt-blown nonwoven fabric)

A polypropylene homopolymer 1 (MFR = 70 g/10 minutes) was used for a polypropylene resin as a raw material of the fiber layer, the polypropylene resin was put into two extruders of a nonwoven fabric manufacturing apparatus, the polypropylene resin was heat-melted at 240°C by the extruders with a mass ratio of gear pumps set to 50/50, and the molten resin was ejected from a spinneret at a spinning speed of 0.3 g/min per single hole. The ejected fibers were sprayed onto a collecting conveyor at a distance of 60 cm from the spinneret by a compressed air of 98 kPa (gauge pressure) heated to 400°C to form a fiber layer. A basis weight thereof was arbitrarily set by adjusting a speed of the collecting conveyor. An average fiber diameter was 2.6 µm, and a basis weight of the fiber layer was 24 g/m² and a thickness thereof was 0.9 mm. A mean flow pore size of the fiber layer M was 11 µm, and an air permeability by the Frazier method was 144 cc/cm²·s.

### Fiber layer N (melt-blown nonwoven fabric)

A nonwoven fabric manufacturing apparatus including two extruders each having a screw (50 mm diameter), a heating body, and a gear pump, a spinneret for mixed fibers (a hole diameter of 0.3 mm, and an effective width of 500 mm in which 501 holes through which resins from the two extruders were alternately ejected were aligned in a line), a compressed air generator, an air heater, a collecting conveyor having a polyester net, and a winder was used to form a fiber layer.

A polypropylene homopolymer 1 (MFR = 82 g/10 minutes) and a polypropylene homopolymer 2 ("FR-185" (MFR = 1400 g/10 minutes) manufactured by LOTTE Chemical Corporation) were used for polypropylene as a raw material, the polypropylenes of the two types were put into the two extruders of the nonwoven fabric manufacturing apparatus, the polypropylenes were heat-melted at 240°C by the extruders with a mass ratio of gear pumps set to 50/50, and the molten resin was ejected from the spinneret at a spinning speed of 0.3 g/min per single hole. The ejected fibers were sprayed onto a collecting conveyor at a distance of 60 cm from the spinneret by a compressed air of 98 kPa (gauge pressure) heated to 400°C to form a fiber layer. A basis weight thereof was set to 80 g/m² by adjusting a speed of the collecting conveyor. An average fiber diameter was 1.3 µm, and this was defined as a fiber layer N. A mean flow pore size thereof was evaluated to be 9.4 µm, and an air permeability by the Frazier method was 15 cc/cm²·s.

### [Preparation of porous layer]

### Porous layers α, β, γ (urethane foam)

From urethane foam resin materials available on the market, Calmflex F-2 (density 25 kg/m³) manufactured by Inoac Corporation with a thickness of 25 mm was used as a porous layer α, that with a thickness of 20 mm was used as a porous layer β, and that with a thickness of 5 mm was used as a porous layer γ. An air permeability by the Frazier method was 50 cc/cm²·s for the porous layer α, 70 cc/cm²·s for the porous layer β, and 180 cc/cm²·s for the porous layer γ.

### Porous layers δ, ζ, θ (air laid)

A sheath-core type thermally fusible composite fiber in which a sheath component with a fiber diameter of 16 µm was made of a high-density polyethylene resin and a core component was made of a polypropylene resin was prepared by a heat-melt spinning method using high-density polyethylene "M6900" (MFR 17 g/10 minutes) manufactured by KEIYO Polyethylene Co., Ltd. as the high-density polyethylene resin, and a polypropylene homopolymer "SA3A" (MFR = 11 g/10 minutes) manufactured by Japan Polypropylene Corporation as the polypropylene resin. Using the obtained sheath-core type thermally fusible composite fiber, a card method through-air nonwoven fabric having a basis weight of 200 g/m², a thickness of 5 mm, and a width of 1000 mm was prepared. The card method through-air nonwoven fabric was crushed to about 8 mm using a uniaxial crusher (ES3280) manufactured by Shoken Co., Ltd. This crushed nonwoven fabric was heated at a set temperature of 142°C by an air-laid tester to obtain a porous layer δ having a basis weight of 1050 g/m² and a thickness of 25 mm, a porous layer ζ having a basis weight of 840 g/m² and a thickness of 20 mm, and a porous layer θ having a basis weight of 210 g/m² and a thickness of 5 mm. The porous layer δ had a density of 42 kg/m³ and an air permeability of 130 cc/cm²·s. The porous layer ζ had a density of 42 kg/m³ and an air permeability of 150 cc/cm²·s. The porous layer θ had a density of 42 kg/m³ and an air permeability of 250 cc/cm²·s.

### Porous layers ε, η, κ (glass fiber)

As a glass fiber material available on the market, an Aclear mat (trade name) having a thickness of 50 mm manufactured by Asahi Fiber Glass Co., Ltd. was processed to have a basis weight of 400 g/m² and a thickness of 25 mm and was used as a porous layer ε. Also, it was processed to have a basis weight of 320 g/m² and a thickness of 20 mm and was used as a porous layer η. Further, it was processed to have a basis weight of 80 g/m² and a thickness of 5 mm and was used as a porous layer κ. The porous layer ε had a density of 16 kg/m³ and an air permeability of 150 cc/cm²·s. The porous layer η had a density of 16 kg/m³ and an air permeability of 170 cc/cm²·s. The porous layer κ had a density of 16 kg/m³ and an air permeability of 300 cc/cm²·s.

### [Example 1]

The fiber layer A as the first fiber layer and the porous layer α were used and overlapped to form the fiber layer A/the porous layer α, which was cut out into a circle having a diameter of 15 mm to prepare a sample for sound absorption coefficient measurement. A sound absorption coefficient thereof was measured in the low-frequency range, the intermediate-frequency range, and the high-frequency range. A difference of the sound absorption coefficient compared to that of a sample in which the fiber layer A was not present (comparative example 1) was taken, and an improvement range was calculated. The improvement range was 0.186 or more in the low-frequency range and 0.159 or more in the intermediate-frequency range, and these were satisfactory. Further, when a difference of the sound absorption coefficient in the high-frequency range from that of comparative example 1 was taken in the same manner and an improvement range was calculated, the improvement range was 0.069 or more and was satisfactory.

### [Example 2]

The fiber layer D as the first fiber layer and the porous layer α were used and overlapped to form the fiber layer D/the porous layer α, which was cut out into a circle having a diameter of 15 mm to prepare a sample for sound absorption coefficient measurement. A sound absorption coefficient thereof was measured in the low-frequency range, the intermediate-frequency range, and the high-frequency range. A difference of the sound absorption coefficient compared to that of comparative example 1 was taken, and an improvement range was calculated. The improvement range was 0.180 or more in the low-frequency range and 0.101 or more in the intermediate-frequency range, and these were satisfactory.

### [Example 3]

The fiber layer E as the first fiber layer and the porous layer α were used and overlapped to form the fiber layer E/the porous layer α, which was cut out into a circle having a diameter of 15 mm to prepare a sample for sound absorption coefficient measurement. A sound absorption coefficient thereof was measured in the low-frequency range, the intermediate-frequency range, and the high-frequency range. A difference of the sound absorption coefficient compared to that of comparative example 1 was taken, and an improvement range was calculated. The improvement range was 0.179 or more in the low-frequency range and 0.082 or more in the intermediate-frequency range, and these were satisfactory.

### [Example 4]

The fiber layer G as the first fiber layer and the porous layer α were used and overlapped to form the fiber layer G/the porous layer α, which was cut out into a circle having a diameter of 15 mm to prepare a sample for sound absorption coefficient measurement. A sound absorption coefficient thereof was measured in the low-frequency range, the intermediate-frequency range, and the high-frequency range. A difference of the sound absorption coefficient compared to that of comparative example 1 was taken, and an improvement range was calculated. The improvement range was 0.235 or more in the low-frequency range and 0.070 or more in the intermediate-frequency range, and these were satisfactory.

### [Example 5]

The fiber layer M as the first fiber layer and the porous layer α were used and overlapped to form the fiber layer M/the porous layer α, which was cut out into a circle having a diameter of 15 mm to prepare a sample for sound absorption coefficient measurement. A sound absorption coefficient thereof was measured in the low-frequency range, the intermediate-frequency range, and the high-frequency range. A difference of the sound absorption coefficient compared to that of comparative example 1 was taken, and an improvement range was calculated. The improvement range was 0.195 or more in the low-frequency range and 0.081 or more in the intermediate-frequency range, and these were satisfactory.

### [Example 6]

The fiber layer A as the first fiber layer and the porous layer δ were used and overlapped to form the fiber layer A/the porous layer δ, which was cut out into a circle having a diameter of 15 mm to prepare a sample for sound absorption coefficient measurement. A sound absorption coefficient thereof was measured in the low-frequency range, the intermediate-frequency range, and the high-frequency range. A difference of the sound absorption coefficient compared to that of comparative example 2 (only the porous layer δ) was taken, and an improvement range was calculated. The improvement range was 0.04 or more in the low-frequency range and 0.117 or more in the intermediate-frequency range, and these were satisfactory.

### [Example 7]

The fiber layer G as the first fiber layer and the porous layer δ were used and overlapped to form the fiber layer G/the porous layer δ, which was cut out into a circle having a diameter of 15 mm to prepare a sample for sound absorption coefficient measurement. A sound absorption coefficient thereof was measured in the low-frequency range, the intermediate-frequency range, and the high-frequency range. A difference of the sound absorption coefficient compared to that of comparative example 2 was taken, and an improvement range was calculated. The improvement range was 0.119 or more in the low-frequency range and 0.125 or more in the intermediate-frequency range, and these were satisfactory.

### [Example 8]

The fiber layer A as the first fiber layer and the porous layer ε were used and overlapped to form the fiber layer A/the porous layer ε, which was cut out into a circle having a diameter of 15 mm to prepare a sample for sound absorption coefficient measurement. A sound absorption coefficient thereof was measured in the low-frequency range, the intermediate-frequency range, and the high-frequency range, and a difference of the sound absorption coefficient from that of a sample of comparative example 3 in which the fiber layer is not present was taken, and an improvement range was calculated. The improvement range was 0.043 or more in the low-frequency range and 0.245 or more in the intermediate-frequency range, and these were satisfactory.

### [Example 9]

The fiber layer H as the first fiber layer and the porous layer α were used and overlapped to form the fiber layer H/the porous layer α, which was cut out into a circle having a diameter of 15 mm to prepare a sample for sound absorption coefficient measurement. A sound absorption coefficient thereof was measured in the low-frequency range, the intermediate-frequency range, and the high-frequency range. A difference of the sound absorption coefficient compared to that of comparative example 1 was taken, and an improvement range was calculated. The improvement range was 0.110 or more in the low-frequency range and 0.173 or more in the intermediate-frequency range, and these were satisfactory.

### [Comparative example 1]

Only the porous layer α (thickness 25 mm) was cut out into a circle having a diameter of 15 mm to prepare a sample for sound absorption coefficient measurement, and a sound absorption coefficient was measured in the low-frequency range, the intermediate-frequency range, and the high-frequency range. Since the sample was an object itself to be compared, a difference in sound absorption coefficient of the sample was 0 in the low-frequency range, the intermediate-frequency range, and the high-frequency range, and improvement of the sound absorbing property was poor.

### [Comparative example 2]

Only the porous layer δ (thickness 25 mm) was cut out into a circle having a diameter of 15 mm to prepare a sample for sound absorption coefficient measurement, and a sound absorption coefficient was measured in the low-frequency range, the intermediate-frequency range, and the high-frequency range. Since the sample was an object itself to be compared, a difference in sound absorption coefficient of the sample was 0 in the low-frequency range, the intermediate-frequency range, and the high-frequency range, and improvement of the sound absorbing property was poor.

### [Comparative example 3]

Only the porous layer ε (thickness 25 mm) was cut out into a circle having a diameter of 15 mm to prepare a sample for sound absorption coefficient measurement, and a sound absorption coefficient was measured in the low-frequency range, the intermediate-frequency range, and the high-frequency range. Since the sample was an object itself to be compared, a difference in sound absorption coefficient of the sample was 0 in the low-frequency range, the intermediate-frequency range, and the high-frequency range, and improvement of the sound absorbing property was poor.

### [Comparative example 4]

The fiber layer J as the first fiber layer and the porous layer α were used and overlapped to form the fiber layer J/the porous layer α, which was cut out into a circle having a diameter of 15 mm to prepare a sample for sound absorption coefficient measurement. A sound absorption coefficient thereof was measured in the low-frequency range, the intermediate-frequency range, and the high-frequency range. When a difference of the sound absorption coefficient compared to that of comparative example 1 was taken and an improvement range was calculated, the improvement range was 0.002 or more in the low-frequency range and 0.003 or more in the intermediate-frequency range, and these were poor.

### [Comparative example 5]

The fiber layer C as the first fiber layer and the porous layer α were used and overlapped to form the fiber layer C/the porous layer α, which was cut out into a circle having a diameter of 15 mm to prepare a sample for sound absorption coefficient measurement. A sound absorption coefficient thereof was measured in the low-frequency range, the intermediate-frequency range, and the high-frequency range. When a difference of the sound absorption coefficient compared to that of comparative example 1 was taken and an improvement range was calculated, the result was that no improvement tendency was observed in both the low-frequency range and the intermediate-frequency range.

### [Comparative example 6]

The fiber layer F as the first fiber layer and the porous layer α were used and overlapped to form the fiber layer F/the porous layer α, which was cut out into a circle having a diameter of 15 mm to prepare a sample for sound absorption coefficient measurement. A sound absorption coefficient thereof was measured in the low-frequency range, the intermediate-frequency range, and the high-frequency range. When a difference of the sound absorption coefficient compared to that of comparative example 1 was taken and an improvement range was calculated, although the improvement range was 0.141 or more in the low-frequency range and was satisfactory, it was 0.021 or more in the intermediate-frequency range and was poor.

The configurations of examples 1 to 9 are summarized in Table 1, and the configurations of comparative examples 1 to 6 are summarized in Table 2. The sound absorption coefficients of examples 1 to 9 are summarized in Table 3, the sound absorption coefficients of comparative examples 1 to 6 are summarized in Table 4, and the improvement ranges of the sound absorption coefficient are summarized in Tables 5 and 6.

**[Table 1]**

| | Example 1 | Example 2 | Example 3 | Example 4 | Example 5 | Example 6 | Example 7 | Example 8 | Example 9 |
|---|---|---|---|---|---|---|---|---|---|
| First fiber layer | Fiber layer A | Fiber layer D | Fiber layer E | Fiber layer G | Fiber layer M | Fiber layer A | Fiber layer G | Fiber layer A | Fiber layer H |
| Fiber material | PVDF | PP | PP | PP | PP | PVDF | PP | PVDF | PP |
| Fiber diameter (µm) | 0.08 | 5×40 | 5×40 | 15 | 3 | 0.08 | 15 | 0.08 | 15 |
| Basis weight (g/m²) | 0.2 | 25 | 35 | 100 | 24 | 0.2 | 100 | 0.2 | 30 |
| Density (kg/m³) | 200 | 227 | 250 | 227 | 27 | 200 | 227 | 200 | 200 |
| Thickness (mm) | 0.001 | 0.11 | 0.14 | 0.44 | 0.9 | 0.001 | 0.44 | 0.001 | 0.15 |
| Air permeability (cc/cm²·sec) | 47 | 138 | 70 | 56 | 144 | 47 | 56 | 47 | 210 |
| First porous layer | Porous layer α | Porous layer α | Porous layer α | Porous layer α | Porous layer α | Porous layer δ | Porous layer δ | Porous layer ε | Porous layer α |
| Material | PU foam material | PU foam material | PU foam material | PU foam material | PU foam material | PP/PE fiber | PP/PE fiber | Glass fiber | PU foam material |
| Density (kg/m³) | 25 | 25 | 25 | 25 | 25 | 42 | 42 | 16 | 25 |
| Thickness (mm) | 25 | 25 | 25 | 25 | 25 | 25 | 25 | 25 | 25 |
| Air permeability (cc/cm²·sec) | 50 | 50 | 50 | 50 | 50 | 130 | 130 | 220 | 50 |

**[Table 2]**

| | Comparative example 1 | Comparative example 2 | Comparative example 3 | Comparative example 4 | Comparative example 5 | Comparative example 6 |
|---|---|---|---|---|---|---|
| First fiber layer | - | - | - | Fiber layer J | Fiber layer C | Fiber layer F |
| Fiber material | - | - | - | PP | PVDF | PP |
| Fiber diameter (µm) | - | - | - | 15 | 0.08 | 5×40 |
| Basis weight (g/m²) | - | - | - | 25 | 3 | 30 |
| Density (kg/m³) | - | - | - | 147 | 214 | 500 |
| Thickness (mm) | - | - | - | 0.17 | 0.014 | 0.06 |
| Air permeability (cc/cm²·sec) | - | - | - | 280 | 0.7 | 22 |
| First porous layer | Porous layer α | Porous layer δ | Porous layer ε | Porous layer α | Porous layer α | Porous layer α |
| Material | PU foam material | PP/PE fiber | Glass fiber | PU foam material | PU foam material | PU foam material |
| Density (kg/m³) | 25 | 42 | 16 | 25 | 25 | 25 |
| Thickness (mm) | 25 | 25 | 25 | 25 | 25 | 25 |
| Air permeability (cc/cm²·sec) | 50 | 130 | 150 | 50 | 50 | 50 |

**[Table 3]**

| Vertical incidence sound absorption coefficient | Example 1 | Example 2 | Example 3 | Example 4 | Example 5 | Example 6 | Example 7 | Example 8 | Example 9 |
|---|---|---|---|---|---|---|---|---|---|
| 500 Hz | 0.355 | 0.349 | 0.348 | 0.404 | 0.364 | 0.285 | 0.355 | 0.217 | 0.279 |
| 630 Hz | 0.451 | 0.444 | 0.443 | 0.517 | 0.478 | 0.381 | 0.418 | 0.261 | 0.352 |
| 800 Hz | 0.578 | 0.565 | 0.561 | 0.649 | 0.620 | 0.509 | 0.509 | 0.336 | 0.463 |
| 1000 Hz | 0.698 | 0.689 | 0.705 | 0.744 | 0.710 | 0.639 | 0.654 | 0.435 | 0.545 |
| 1600 Hz | 0.867 | 0.925 | 0.928 | 0.935 | 0.954 | 0.896 | 0.896 | 0.710 | 0.811 |
| 2000 Hz | 0.973 | 0.957 | 0.951 | 0.941 | 0.950 | 0.962 | 0.971 | 0.817 | 0.918 |
| 2500 Hz | 0.918 | 0.860 | 0.842 | 0.829 | 0.841 | 0.986 | 0.994 | 0.889 | 0.932 |
| 5000 Hz | 0.948 | 0.942 | 0.953 | 0.937 | 0.946 | 0.921 | 0.916 | 0.948 | 0.888 |
| 6300 Hz | 0.983 | 0.924 | 0.938 | 0.924 | 0.930 | 0.929 | 0.930 | 0.907 | 0.988 |
| 8000 Hz | 0.976 | 0.923 | 0.928 | 0.901 | 0.917 | 0.989 | 0.991 | 0.881 | 0.997 |
| 10000 Hz | 0.980 | 0.956 | 0.955 | 0.940 | 0.953 | 0.977 | 0.967 | 0.950 | 0.998 |

**[Table 4]**

| Vertical incidence sound absorption coefficient | Comparative example 1 | Comparative example 2 | Comparative example 3 | Comparative example 4 | Comparative example 5 | Comparative example 6 |
|---|---|---|---|---|---|---|
| 500Hz | 0.169 | 0.236 | 0.161 | 0.172 | 0.090 | 0.310 |
| 630Hz | 0.202 | 0.297 | 0.218 | 0.212 | 0.100 | 0.406 |
| 800Hz | 0.257 | 0.376 | 0.265 | 0.259 | 0.120 | 0.547 |
| 1000Hz | 0.335 | 0.465 | 0.313 | 0.344 | 0.260 | 0.689 |
| 1600Hz | 0.514 | 0.704 | 0.466 | 0.524 | 0.400 | 0.981 |
| 2000Hz | 0.627 | 0.799 | 0.542 | 0.637 | 0.560 | 0.929 |
| 2500Hz | 0.759 | 0.868 | 0.608 | 0.763 | 0.580 | 0.780 |
| 5000Hz | 0.759 | 0.954 | 0.851 | 0.787 | 0.500 | 0.853 |
| 6300Hz | 0.819 | 0.940 | 0.901 | 0.826 | 0.520 | 0.837 |
| 8000Hz | 0.901 | 0.947 | 0.846 | 0.956 | 0.520 | 0.926 |
| 10000Hz | 0.911 | 0.960 | 0.818 | 0.912 | 0.320 | 0.920 |

**[Table 5]**

| Improvement range of sound absorption coefficient | Example 1 | Example 2 | Example 3 | Example 4 | Example 5 | Example 6 | Example 7 | Example 8 | Example 9 |
|---|---|---|---|---|---|---|---|---|---|
| 500 Hz | 0.186 | 0.180 | 0.179 | 0.235 | 0.195 | 0.049 | 0.119 | 0.056 | 0.110 |
| 630 Hz | 0.249 | 0.242 | 0.241 | 0.315 | 0.275 | 0.084 | 0.121 | 0.043 | 0.150 |
| 800 Hz | 0.321 | 0.308 | 0.304 | 0.392 | 0.363 | 0.133 | 0.133 | 0.071 | 0.206 |
| 1000 Hz | 0.363 | 0.354 | 0.370 | 0.409 | 0.376 | 0.173 | 0.189 | 0.122 | 0.211 |
| Evaluation for low-frequency range | O | O | O | O | O | O | O | O | O |
| 1600 Hz | 0.352 | 0.411 | 0.414 | 0.421 | 0.440 | 0.191 | 0.192 | 0.245 | 0.297 |
| 2000 Hz | 0.346 | 0.330 | 0.324 | 0.314 | 0.323 | 0.162 | 0.172 | 0.275 | 0.291 |
| 2500 Hz | 0.159 | 0.101 | 0.082 | 0.070 | 0.081 | 0.117 | 0.125 | 0.282 | 0.173 |
| Evaluation for intermediate-frequency range | O | O | O | O | O | O | O | O | O |

**[Table 6]**

| Improvement range of sound absorption coefficient | Comparative example 1 | Comparative example 2 | Comparative example 3 | Comparative example 4 | Comparative example 5 | Comparative example 6 |
|---|---|---|---|---|---|---|
| 500Hz | 0 | 0 | 0 | 0.003 | -0.079 | 0.141 |
| 630Hz | 0 | 0 | 0 | 0.010 | -0.102 | 0.203 |
| 800Hz | 0 | 0 | 0 | 0.002 | -0.137 | 0.290 |
| 1000Hz | 0 | 0 | 0 | 0.009 | -0.075 | 0.355 |
| Evaluation for low-frequency range | x | x | x | x | x | O |
| 1600Hz | 0 | 0 | 0 | 0.010 | -0.114 | 0.467 |
| 2000Hz | 0 | 0 | 0 | 0.010 | -0.067 | 0.302 |
| 2500Hz | 0 | 0 | 0 | 0.003 | -0.179 | 0.021 |
| Evaluation for intermediate-frequency range | x | x | x | x | x | x |

### [Example 10]

The fiber layer A as the first fiber layer and the porous layer β were used and overlapped to form the fiber layer A/the porous layer β, which was cut out into a circle having a diameter of 15 mm to prepare a sample for sound absorption coefficient measurement. A sound absorption coefficient thereof was measured in the low-frequency range, the intermediate-frequency range, and the high-frequency range. When a difference of the sound absorption coefficient compared to that of comparative example 7 (only the porous layer β) was taken and an improvement range was calculated, the improvement range was 0.113 or more in the low-frequency range and 0.033 or more in the intermediate-frequency range, and these were satisfactory.

### [Example 11]

The fiber layer E as the first fiber layer and the porous layer β were used and overlapped to form the fiber layer E/the porous layer β, which was cut out into a circle having a diameter of 15 mm to prepare a sample for sound absorption coefficient measurement. A sound absorption coefficient thereof was measured in the low-frequency range, the intermediate-frequency range, and the high-frequency range. When a difference of the sound absorption coefficient compared to that of comparative example 7 was taken and an improvement range was calculated, the improvement range was 0.030 or more in the low-frequency range and 0.039 or more in the intermediate-frequency range, and these were satisfactory.

### [Example 12]

The fiber layer G as the first fiber layer and the porous layer β were used and overlapped to form the fiber layer G/the porous layer β, which was cut out into a circle having a diameter of 15 mm to prepare a sample for sound absorption coefficient measurement. A sound absorption coefficient thereof was measured in the low-frequency range, the intermediate-frequency range, and the high-frequency range. When a difference of the sound absorption coefficient compared to that of comparative example 7 was taken and an improvement range was calculated, the improvement range was 0.085 or more in the low-frequency range and 0.063 or more in the intermediate-frequency range, and these were satisfactory.

### [Example 13]

The fiber layer M as the first fiber layer and the porous layer β were used and overlapped to form the fiber layer M/the porous layer β, which was cut out into a circle having a diameter of 15 mm to prepare a sample for sound absorption coefficient measurement. A sound absorption coefficient thereof was measured in the low-frequency range, the intermediate-frequency range, and the high-frequency range. When a difference of the sound absorption coefficient compared to that of comparative example 7 was taken and an improvement range was calculated, the improvement range was 0.040 or more in the low-frequency range and 0.034 or more in the intermediate-frequency range, and these were satisfactory.

### [Example 14]

The fiber layer A as the first fiber layer and the porous layer ζ were used and overlapped to form the fiber layer A/the porous layer ζ, which was cut out into a circle having a diameter of 15 mm to prepare a sample for sound absorption coefficient measurement. A sound absorption coefficient thereof was measured in the low-frequency range, the intermediate-frequency range, and the high-frequency range. When a difference of the sound absorption coefficient compared to that of comparative example 8 (only the porous layer ζ) was taken and an improvement range was calculated, the improvement range was 0.086 or more in the low-frequency range and 0.211 or more in the intermediate-frequency range, and these were satisfactory.

### [Example 15]

The fiber layer G as the first fiber layer and the porous layer ζ were used and overlapped to form the fiber layer G/the porous layer ζ, which was cut out into a circle having a diameter of 15 mm to prepare a sample for sound absorption coefficient measurement. A sound absorption coefficient thereof was measured in the low-frequency range, the intermediate-frequency range, and the high-frequency range. When a difference of the sound absorption coefficient compared to that of comparative example 8 was taken and an improvement range was calculated, the improvement range was 0.031 or more in the low-frequency range and 0.056 or more in the intermediate-frequency range, and these were satisfactory.

### [Example 16]

The fiber layer A as the first fiber layer and the porous layer η were used and overlapped to form the fiber layer A/the porous layer η, which was cut out into a circle having a diameter of 15 mm to prepare a sample for sound absorption coefficient measurement. A sound absorption coefficient thereof was measured in the low-frequency range, the intermediate-frequency range, and the high-frequency range. When a difference of the sound absorption coefficient compared to that of comparative example 9 (only the porous layer η) was taken and an improvement range was calculated, the improvement range was 0.039 or more in the low-frequency range and 0.279 or more in the intermediate-frequency range, and these were satisfactory.

### [Comparative example 7]

Only the porous layer β (thickness 20 mm) was cut out into a circle having a diameter of 15 mm to prepare a sample for sound absorption coefficient measurement. Since the sample is an object itself to be compared, a difference in sound absorption coefficient of the sample is 0 in the low-frequency range, the intermediate-frequency range, and the high-frequency range, and no improvement effect is observed.

### [Comparative example 8]

Only the porous layer ζ (thickness 20 mm) was cut out into a circle having a diameter of 15 mm to prepare a sample for sound absorption coefficient measurement. Since the sample is an object itself to be compared, a difference in sound absorption coefficient of the sample is 0 in the low-frequency range, the intermediate-frequency range, and the high-frequency range, and no improvement effect is observed.

### [Comparative example 9]

Only the porous layer η (thickness 20 mm) was cut out into a circle having a diameter of 15 mm to prepare a sample for sound absorption coefficient measurement. Since the sample is an object itself to be compared, a difference in sound absorption coefficient of the sample is 0 in the low-frequency range, the intermediate-frequency range, and the high-frequency range, and no improvement effect is observed.

### [Comparative example 10]

The fiber layer J as the first fiber layer and the porous layer β were used and overlapped to form the fiber layer J/the porous layer β, which was cut out into a circle having a diameter of 15 mm to prepare a sample for sound absorption coefficient measurement. A sound absorption coefficient thereof was measure in the low-frequency range, the intermediate-frequency range, and the high-frequency range. When a difference of the sound absorption coefficient compared to that of comparative example 7 was taken and an improvement range was calculated, the improvement range was 0.003 or more in the low-frequency range and 0.002 or more in the intermediate-frequency range, and the improvement range was small and poor.

### [Comparative example 11]

The fiber layer F as the first fiber layer and the porous layer β were used and overlapped to form the fiber layer F/the porous layer β, which was cut out into a circle having a diameter of 15 mm to prepare a sample for sound absorption coefficient measurement. A sound absorption coefficient thereof was measured in the low-frequency range, the intermediate-frequency range, and the high-frequency range. When a difference of the sound absorption coefficient compared to that of comparative example 7 was taken and an improvement range was calculated, the result was that no improvement tendency was observed in the intermediate-frequency range, although the improvement range was 0.081 or more in the low-frequency range.

The configurations of examples 10 to 16 and comparative examples 7 to 11 are summarized in Table 7, the vertical incidence sound absorption coefficients are summarized in Table 8, and the improvement ranges of the sound absorption coefficient are summarized in Table 9.

**[Table 7]**

| | Example 10 | Example 11 | Example 12 | Example 13 | Example 14 | Example 15 | Example 16 | Comparative example 7 | Comparative example 8 | Comparative example 9 | Comparative example 10 | Comparative example 11 |
|---|---|---|---|---|---|---|---|---|---|---|---|---|
| First fiber layer | Fiber layer A | Fiber layer E | Fiber layer G | Fiber layer M | Fiber layer A | Fiber layer G | Fiber layer A | - | - | - | Fiber layer J | Fiber layer F |
| Fiber material | PVDF | PP | PP | PP | PVDF | PP | PVDF | - | - | - | PP | PP |
| Fiber diameter (µm) | 0.08 | 5×40 | 15 | 3 | 0.08 | 15 | 0.08 | - | - | - | 15 | 5×40 |
| **Basis** weight (g/m²) | 0.2 | 35 | 100 | 24 | 0.2 | 100 | 0.2 | - | - | - | 25 | 30 |
| Density (kg/m³) | 200 | 250 | 227 | 27 | 200 | 227 | 200 | - | - | - | 147 | 500 |
| Thickness (mm) | 0.001 | 0.14 | 0.44 | 0.9 | 0.001 | 0.44 | 0.001 | - | - | - | 0.17 | 0.06 |
| Air permeability (cc/cm²·sec) | 47 | 70 | 56 | 144 | 47 | 56 | 47 | - | - | - | 280 | 22 |
| First porous layer | Porous layer β | Porous layer β | Porous layer β | Porous layer β | Porous layer ζ | Porous layer ζ | Porous layer η | Porous layer β | Porous layer ζ | Porous layer η | Porous layer β | Porous layer β |
| Material | PU foam material | PU foam material | PU foam material | PU foam material | PP/PE fiber | PP/PE fiber | Glass fiber | PU foam material | PP/PE fiber | Glass fiber | PU foam material | PU foam material |
| Density (kg/m³) | 25 | 25 | 25 | 25 | 42 | 42 | 16 | 25 | 42 | 16 | 25 | 25 |
| Thickness (mm) | 20 | 20 | 20 | 20 | 25 | 25 | 20 | 20 | 20 | 20 | 20 | 20 |
| Air permeability (cc/cm²·sec) | 70 | 70 | 70 | 70 | 150 | 150 | 170 | 70 | 150 | 170 | 70 | 70 |

**[Table 8]**

| Vertical incidence sound absorption coefficient | Example 10 | Example 11 | Example 12 | Example 13 | Example 14 | Example 15 | Example 16 | Comparative example 7 | Comparative example 8 | Comparative example 9 | Comparative example 10 | Comparative example 11 |
|---|---|---|---|---|---|---|---|---|---|---|---|---|
| 500 Hz | 0.347 | 0.238 | 0.289 | 0.244 | 0.285 | 0.231 | 0.207 | 0.203 | 0.199 | 0.168 | 0.220 | 0.284 |
| 630 Hz | 0.399 | 0.295 | 0.366 | 0.316 | 0.381 | 0.287 | 0.261 | 0.254 | 0.243 | 0.196 | 0.257 | 0.336 |
| 800 Hz | 0.462 | 0.380 | 0.477 | 0.419 | 0.509 | 0.380 | 0.336 | 0.350 | 0.306 | 0.236 | 0.367 | 0.508 |
| 1000 Hz | 0.519 | 0.482 | 0.609 | 0.469 | 0.639 | 0.498 | 0.435 | 0.401 | 0.352 | 0.278 | 0.413 | 0.697 |
| 1600 Hz | 0.744 | 0.764 | 0.777 | 0.835 | 0.896 | 0.640 | 0.710 | 0.703 | 0.585 | 0.431 | 0.717 | 0.939 |
| 2000 Hz | 0.861 | 0.869 | 0.909 | 0.951 | 0.962 | 0.861 | 0.817 | 0.825 | 0.691 | 0.506 | 0.834 | 0.984 |
| 2500 Hz | 0.937 | 0.943 | 0.967 | 0.938 | 0.986 | 0.926 | 0.889 | 0.904 | 0.775 | 0.572 | 0.906 | 0.859 |
| 5000 Hz | 0.792 | 0.676 | 0.684 | 0.818 | 0.921 | 0.777 | 0.948 | 0.797 | 0.941 | 0.790 | 0.942 | 0.721 |
| 6300 Hz | 0.737 | 0.779 | 0.786 | 0.956 | 0.929 | 0.929 | 0.907 | 0.945 | 0.951 | 0.868 | 0.952 | 0.861 |
| 8000 Hz | 0.914 | 0.960 | 0.955 | 0.931 | 0.989 | 0.969 | 0.881 | 0.975 | 0.950 | 0.915 | 0.957 | 0.874 |
| 10000 Hz | 0.983 | 0.971 | 0.943 | 0.941 | 0.977 | 0.952 | 0.950 | 0.954 | 0.955 | 0.882 | 0.956 | 0.850 |

**[Table 9]**

| Improvement range of sound absorption coefficient | Example 10 | Example 11 | Example 12 | Example 13 | Exampl e 14 | Exampl e 15 | Exampl e 16 | Comparative example 7 | Comparative example 8 | Comparative example 9 | Comparative example 10 | Comparativ e example 11 |
|---|---|---|---|---|---|---|---|---|---|---|---|---|
| 500 Hz | 0.143 | 0.034 | 0.085 | 0.040 | 0.086 | 0.031 | 0.039 | 0 | 0 | 0 | 0.016 | 0.081 |
| 630 Hz | 0.145 | 0.041 | 0.112 | 0.062 | 0.138 | 0.044 | 0.065 | 0 | 0 | 0 | 0.003 | 0.082 |
| 800 Hz | 0.113 | 0.030 | 0.128 | 0.069 | 0.203 | 0.074 | 0.100 | 0 | 0 | 0 | 0.017 | 0.159 |
| 1000 Hz | 0.118 | 0.081 | 0.208 | 0.068 | 0.287 | 0.146 | 0.157 | 0 | 0 | 0 | 0.011 | 0.296 |
| Evaluation for low-frequency range | O | O | O | O | O | O | O | x | x | x | x | O |
| 1600 Hz | 0.041 | 0.061 | 0.074 | 0.132 | 0.311 | 0.056 | 0.279 | 0 | 0 | 0 | 0.014 | 0.236 |
| 2000 Hz | 0.036 | 0.044 | 0.084 | 0.126 | 0.270 | 0.170 | 0.311 | 0 | 0 | 0 | 0.009 | 0.159 |
| 2500 Hz | 0.033 | 0.039 | 0.063 | 0.034 | 0.211 | 0.150 | 0.317 | 0 | 0 | 0 | 0.002 | -0.045 |
| Evaluation for intermediate-f requency range | O | O | O | O | O | O | O | x | x | x | x | x |

### [Example 17]

The fiber layer A as the first fiber layer and the porous layer β as the porous layer were used and overlapped to form the fiber layer A/the porous layer β/the fiber layer B, which was cut out into a circle having a diameter of 15 mm to prepare a sample for sound absorption coefficient measurement. A sound absorption coefficient thereof was measured in the low-frequency range, the intermediate-frequency range, and the high-frequency range. When a difference of the sound absorption coefficient with respect to that of comparative example 7 (only the porous layer β) was taken and an improvement range was calculated, the improvement range was 0.171 or more in the low-frequency range and 0.035 or more in the intermediate-frequency range, and these were satisfactory.

### [Example 18]

The fiber layer D as the first fiber layer, the fiber layer K as the second fiber layer, and the porous layer β as the porous layer were used and overlapped to form the fiber layer D/the porous layer β/the fiber layer K, which was cut out into a circle having a diameter of 15 mm to prepare a sample for sound absorption coefficient measurement. A sound absorption coefficient thereof was measured in the low-frequency range, the intermediate-frequency range, and the high-frequency range. When a difference of the sound absorption coefficient compared to that of comparative example 7 was taken and an improvement range was calculated, the improvement range was 0.037 or more in the low-frequency range and 0.037 or more in the intermediate-frequency range, and these were satisfactory.

### [Example 19]

The fiber layer E as the first fiber layer, the fiber layer K as the second fiber layer, and the porous layer β as the porous layer were used and overlapped to form the fiber layer E/the porous layer β/the fiber layer K, which was cut out into a circle having a diameter of 15 mm to prepare a sample for sound absorption coefficient measurement. A sound absorption coefficient thereof was measure in the low-frequency range, the intermediate-frequency range, and the high-frequency range. When a difference of the sound absorption coefficient compared to that of comparative example 7 was taken and an improvement range was calculated, the improvement range was 0.038 or more in the low-frequency range and 0.050 or more in the intermediate-frequency range, and these were satisfactory.

### [Example 20]

The fiber layer G as the first fiber layer, the fiber layer K as the second fiber layer, and the porous layer β as the porous layer were used and overlapped to form the fiber layer G/the porous layer β/the fiber layer K, which was cut out into a circle having a diameter of 15 mm to prepare a sample for sound absorption coefficient measurement. A sound absorption coefficient thereof was measured in the low-frequency range, the intermediate-frequency range, and the high-frequency range. When a difference of the sound absorption coefficient compared to that of comparative example 7 was taken and an improvement range was calculated, the improvement range was 0.103 or more in the low-frequency range and 0.040 or more in the intermediate-frequency range, and these were satisfactory.

### [Example 21]

The fiber layer M as the first fiber layer, the fiber layer N as the second fiber layer, and the porous layer β as the porous layer were used and overlapped to form the fiber layer M/the porous layer β/the fiber layer N, which was cut out into a circle having a diameter of 15 mm to prepare a sample for sound absorption coefficient measurement. When a sound absorption coefficient thereof was measured in the low-frequency range, the intermediate-frequency range, and the high-frequency range, a difference of the sound absorption coefficient from that of a sample of comparative example 7 in which the fiber layer is not present was taken and an improvement range was calculated, the improvement range was 0.036 or more in the low-frequency range and 0.033 or more in the intermediate-frequency range, and these were satisfactory.

### [Example 22]

The fiber layer A as the first fiber layer, the fiber layer B as the second fiber layer, and the porous layer ζ as the porous layer were used and overlapped to form the fiber layer A/the porous layer ζ/the fiber layer B, which was cut out into a circle having a diameter of 15 mm to prepare a sample for sound absorption coefficient measurement. A sound absorption coefficient thereof was measured in the low-frequency range, the intermediate-frequency range, and the high-frequency range. When a difference of the sound absorption coefficient compared to that of comparative example 8 was taken and an improvement range was calculated, the improvement range was 0.130 or more in the low-frequency range and 0.214 or more in the intermediate-frequency range, and these were satisfactory.

### [Example 23]

The fiber layer G as the first fiber layer, the fiber layer K as the second fiber layer, and the porous layer ζ were used and overlapped to form the fiber layer G/the porous layer ζ/the fiber layer K, which was cut out into a circle having a diameter of 15 mm to prepare a sample for sound absorption coefficient measurement. A sound absorption coefficient thereof was measured in the low-frequency range, the intermediate-frequency range, and the high-frequency range. When a difference of the sound absorption coefficient compared to that of comparative example 8 was taken and an improvement range was calculated, the improvement range was 0.097 or more in the low-frequency range and 0.177 or more in the intermediate-frequency range, and these were satisfactory.

### [Example 24]

The fiber layer A as the first fiber layer, the fiber layer B as the second fiber layer, and the porous layer η were used and overlapped to form the fiber layer A/the porous layer η/the fiber layer B, which was cut out into a circle having a diameter of 15 mm to prepare a sample for sound absorption coefficient measurement. A sound absorption coefficient thereof was measured in the low-frequency range, the intermediate-frequency range, and the high-frequency range. When a difference of the sound absorption coefficient compared to that of comparative example 9 was taken and an improvement range was calculated, the improvement range was 0.141 or more in the low-frequency range and 0.277 or more in the intermediate-frequency range, and these were satisfactory.

### [Comparative example 12]

The fiber layer J as the first fiber layer, the fiber layer K as the second fiber layer, and the porous layer β were used and overlapped to form the fiber layer J/the porous layer β/the fiber layer K, which was cut out into a circle having a diameter of 15 mm to prepare a sample for sound absorption coefficient measurement. A sound absorption coefficient thereof was measured in the low-frequency range, the intermediate-frequency range, and the high-frequency range. When a difference of the sound absorption coefficient compared to that of comparative example 7 was taken and an improvement range was calculated, the result was that the improvement range was 0.002 or more in the low-frequency range and no improvement tendency was observed in the intermediate-frequency range.

### [Comparative example 13]

The fiber layer F as the first fiber layer, the fiber layer K as the second fiber layer, and the porous layer β were used and overlapped to form the fiber layer F/the porous layer β/the fiber layer K, which was cut out into a circle having a diameter of 15 mm to prepare a sample for sound absorption coefficient measurement. A sound absorption coefficient thereof was measured in the low-frequency range, the intermediate-frequency range, and the high-frequency range. When a difference of the sound absorption coefficient with respect to that of comparative example 7 was taken and an improvement range was calculated, the result was that no improvement tendency was observed in both the low-frequency range and the intermediate-frequency range, although the improvement range in the low-frequency range was 0.093 or more and was satisfactory.

The configurations of examples 17 to 24 and comparative examples 12 and 13 are summarized in Table 10, the vertical incidence sound absorption coefficients are summarized in Table 11, and the improvement ranges of the sound absorption coefficient are summarized in Table 12.

**[Table 10]**

| | Example 17 | Example 18 | Example 19 | Example 20 | Example 21 | Example 22 | Example 23 | Example 24 | Comparative example 12 | Comparative example 13 |
|---|---|---|---|---|---|---|---|---|---|---|
| First fiber layer | Fiber layer A | Fiber layer D | Fiber layer E | Fiber layer G | Fiber layer M | Fiber layer A | Fiber layer G | Fiber layer A | Fiber layer J | Fiber layer F |
| Fiber material | PVDF | PP | PP | PP | PP | PVDF | PP | PVDF | PP | PP |
| Fiber diameter (µm) | 0.08 | 5×40 | 5×40 | 15 | 3 | 0.08 | 15 | 0.08 | 15 | 5×40 |
| Basis weight (g/m²) | 0.2 | 25 | 35 | 100 | 24 | 0.2 | 100 | 0.2 | 25 | 30 |
| Density (kg/m³) | 200 | 227 | 250 | 227 | 27 | 200 | 227 | 200 | 147 | 500 |
| Thickness (mm) | 0.001 | 0.11 | 0.14 | 0.44 | 0.9 | 0.001 | 0.44 | 0.001 | 0.17 | 0.06 |
| Air permeability (cc/cm²·sec) | 47 | 138 | 70 | 56 | 144 | 47 | 56 | 47 | 280 | 22 |
| First porous layer | Porous layer β | Porous layer β | Porous layer β | Porous layer β | Porous layer β | Porous layer ζ | Porous layer ζ | Porous layer η | Porous layer β | Porous layer β |
| Material | PU foam material | PU foam material | PU foam material | PU foam material | PU foam material | PP/PE fiber | PP/PE fiber | Glass fiber | PU foam material | PU foam material |
| Density (kg/m³) | 25 | 25 | 25 | 25 | 25 | 42 | 42 | 16 | 25 | 25 |
| Thickness (mm) | 20 | 20 | 20 | 20 | 20 | 25 | 20 | 20 | 20 | 20 |
| Air permeability (cc/cm²·sec) | 70 | 70 | 70 | 70 | 70 | 150 | 150 | 170 | 70 | 70 |
| Second fiber layer | Fiber layer B | Fiber layer K | Fiber layer K | Fiber layer K | Fiber layer N | Fiber layer B | Fiber layer K | Fiber layer B | Fiber layer K | Fiber layer K |
| Material | PVDF | PP | PP | PP | PP | PVDF | PP | PVDF | PP | PP |
| Fiber diameter (µm) | 0.08 | 5×40 | 5×40 | 5×40 | 1.3 | 0.08 | 5×40 | 0.08 | 5×40 | 5×40 |
| Basis weight (g/m²) | 0.6 | 45 | 45 | 45 | 80 | 0.6 | 45 | 0.6 | 45 | 45 |
| Density (kg/m3) | 214 | 643 | 643 | 643 | 35 | 214 | 643 | 214 | 643 | 643 |
| Thickness (mm) | 0.0028 | 0.07 | 0.07 | 0.07 | 2.3 | 0.0028 | 0.07 | 0.0028 | 0.07 | 0.07 |
| Air permeability (cc/cm2·sec) | 10 | 14 | 14 | 14 | 15 | 10 | 14 | 10 | 14 | 14 |

**[Table 11]**

| Vertical incidence sound absorption coefficient | Example 17 | Example 18 | Example 19 | Example 20 | Example 21 | Example 22 | Example 23 | Example 24 | Comparative example 12 | Comparative example 13 |
|---|---|---|---|---|---|---|---|---|---|---|
| 500Hz | 0.375 | 0.240 | 0.255 | 0.330 | 0.243 | 0.330 | 0.297 | 0.309 | 0.207 | 0.296 |
| 630Hz | 0.477 | 0.299 | 0.307 | 0.381 | 0.297 | 0.415 | 0.367 | 0.349 | 0.256 | 0.389 |
| 800Hz | 0.607 | 0.390 | 0.388 | 0.452 | 0.386 | 0.513 | 0.452 | 0.410 | 0.355 | 0.525 |
| 1000Hz | 0.732 | 0.485 | 0.505 | 0.530 | 0.445 | 0.579 | 0.511 | 0.486 | 0.411 | 0.653 |
| 1600Hz | 0.927 | 0.779 | 0.793 | 0.743 | 0.737 | 0.863 | 0.802 | 0.708 | 0.580 | 0.877 |
| 2000Hz | 0.994 | 0.888 | 0.908 | 0.894 | 0.868 | 0.948 | 0.900 | 0.800 | 0.652 | 0.949 |
| 2500Hz | 0.938 | 0.941 | 0.954 | 0.944 | 0.950 | 0.990 | 0.953 | 0.868 | 0.730 | 0.757 |
| 5000Hz | 0.767 | 0.682 | 0.683 | 0.880 | 0.883 | 0.950 | 0.955 | 0.946 | 0.916 | 0.774 |
| 6300Hz | 0.874 | 0.786 | 0.793 | 0.966 | 0.974 | 0.953 | 0.910 | 0.924 | 0.940 | 0.946 |
| 8000Hz | 0.928 | 0.960 | 0.961 | 0.981 | 0.985 | 0.970 | 0.926 | 0.910 | 0.922 | 0.888 |
| 10000Hz | 0.927 | 0.974 | 0.971 | 0.946 | 0.951 | 0.983 | 0.990 | 0.959 | 0.984 | 0.899 |

**[Table 12]**

| Improvement range of sound absorption coefficient | Example 17 | Example 18 | Example 19 | Example 20 | Example 21 | Example 22 | Example 23 | Example 24 | Comparative example 12 | Comparative example 13 |
|---|---|---|---|---|---|---|---|---|---|---|
| 500Hz | 0.171 | 0.037 | 0.052 | 0.126 | 0.039 | 0.130 | 0.097 | 0.141 | 0.004 | 0.093 |
| 630Hz | 0.223 | 0.045 | 0.053 | 0.127 | 0.043 | 0.172 | 0.124 | 0.154 | 0.002 | 0.135 |
| 800Hz | 0.258 | 0.041 | 0.038 | 0.103 | 0.036 | 0.207 | 0.146 | 0.175 | 0.005 | 0.176 |
| 1000Hz | 0.331 | 0.083 | 0.103 | 0.129 | 0.044 | 0.227 | 0.159 | 0.208 | 0.009 | 0.252 |
| Evaluation for low-frequency range | O | O | O | O | O | O | O | O | x | O |
| 1600Hz | 0.224 | 0.076 | 0.089 | 0.040 | 0.033 | 0.279 | 0.218 | 0.277 | - 0.124 | 0.174 |
| 2000Hz | 0.169 | 0.063 | 0.083 | 0.069 | 0.042 | 0.256 | 0.208 | 0.294 | - 0.173 | 0.124 |
| 2500Hz | 0.035 | 0.037 | 0.050 | 0.040 | 0.046 | 0.214 | 0.177 | 0.296 | - 0.174 | -0.147 |
| Evaluation for intermediate-frequency range | O | O | O | O | O | O | O | O | x | x |

### [Example 25]

The fiber layer A as the first fiber layer, the fiber layer B as the second fiber layer, and the porous layer β and the porous layer γ as the porous layers were used and overlapped to form the fiber layer A/the porous layer β/the fiber layer B/the porous layer γ, which was cut out into a circle having a diameter of 15 mm to prepare a sample for sound absorption coefficient measurement. When a sound absorption coefficient thereof was measured in the low-frequency range, the intermediate-frequency range, and the high-frequency range, a difference of the sound absorption coefficient compared to that of comparative example 1 was taken and an improvement range was calculated, the improvement range was 0.142 or more in the low-frequency range, 0.213 or more in the intermediate-frequency range, and 0.034 or more in the high-frequency range, and these were satisfactory.

### [Example 26]

The fiber layer D as the first fiber layer, the fiber layer K as the second fiber layer, and the porous layer β and the porous layer γ as the porous layers were used and overlapped to form the fiber layer D/the porous layer β/the fiber layer K/the porous layer γ, which was cut out into a circle having a diameter of 15 mm to prepare a sample for sound absorption coefficient measurement. When a sound absorption coefficient thereof was measured in the low-frequency range, the intermediate-frequency range, and the high-frequency range, a difference of the sound absorption coefficient compared to that of comparative example 1 was taken and an improvement range was calculated, the improvement range was 0.061 or more in the low-frequency range, 0.176 or more in the intermediate-frequency range, and 0.056 or more in the high-frequency range, and these were satisfactory.

### [Example 27]

The fiber layer E as the first fiber layer, the fiber layer K as the second fiber layer, and the porous layer β and the porous layer γ as the porous layers were used and overlapped to form the fiber layer E/the porous layer β/the fiber layer K/the porous layer γ, which was cut out into a circle having a diameter of 15 mm to prepare a sample for sound absorption coefficient measurement. When a sound absorption coefficient thereof was measured in the low-frequency range, the intermediate-frequency range, and the high-frequency range, a difference of the sound absorption coefficient compared to that of comparative example 1 was taken, and an improvement range was calculated, the improvement range was 0.118 or more in the low-frequency range, 0.204 or more in the intermediate-frequency range, and 0.034 or more in the high-frequency range, and these were satisfactory.

### [Example 28]

The fiber layer G as the first fiber layer, the fiber layer K as the second fiber layer, and the porous layer β and the porous layer γ as the porous layers were used and overlapped to form the fiber layer G/the porous layer β/the fiber layer K/the porous layer γ, which was cut out into a circle having a diameter of 15 mm to prepare a sample for sound absorption coefficient measurement. When a sound absorption coefficient thereof was measured in the low-frequency range, the intermediate-frequency range, and the high-frequency range, a difference of the sound absorption coefficient compared to that of comparative example 1 was taken, and an improvement range was calculated, the improvement range was 0.093 or more in the low-frequency range, 0.206 or more in the intermediate-frequency range, and 0.044 or more in the high-frequency range, and these were satisfactory.

### [Example 29]

The fiber layer A as the first fiber layer, the fiber layer B as the second fiber layer, and the porous layer ζ and the porous layer θ as the porous layers were used and overlapped to form the fiber layer A/the porous layer ζ/the fiber layer B/the porous layer θ, which was cut out into a circle having a diameter of 15 mm to prepare a sample for sound absorption coefficient measurement. When a sound absorption coefficient thereof was measured in the low-frequency range, the intermediate-frequency range, and the high-frequency range, a difference of the sound absorption coefficient compared to that of comparative example 2 was taken, and an improvement range was calculated, the improvement range was 0.059 or more in the low-frequency range, 0.112 or more in the intermediate-frequency range, and 0.034 or more in the high-frequency range, and these were satisfactory.

### [Example 30]

The fiber layer G as the first fiber layer, the fiber layer K as the second fiber layer, and the porous layer ζ and the porous layer θ as the porous layers were used and overlapped to form the fiber layer G/the porous layer ζ/the fiber layer K/the porous layer θ, which was cut out into a circle having a diameter of 15 mm to prepare a sample for sound absorption coefficient measurement. When a sound absorption coefficient thereof was measured in the low-frequency range, the intermediate-frequency range, and the high-frequency range, a difference of the sound absorption coefficient compared to that of comparative example 2 was taken, and an improvement range was calculated, the improvement range was 0.072 or more in the low-frequency range, 0.122 or more in the intermediate-frequency range, and 0.030 or more in the high-frequency range, and these were satisfactory.

### [Example 31]

The fiber layer A as the first fiber layer, the fiber layer B as the second fiber layer, and the porous layer η and the porous layer κ as the porous layers were used and overlapped to form the fiber layer A/the porous layer η/the fiber layer B/the porous layer κ, which was cut out into a circle having a diameter of 15 mm to prepare a sample for sound absorption coefficient measurement. When a sound absorption coefficient thereof was measured in the low-frequency range, the intermediate-frequency range, and the high-frequency range, a difference of the sound absorption coefficient compared to that of comparative example 3 was taken, and an improvement range was calculated, the improvement range was 0.068 or more in the low-frequency range, 0.262 or more in the intermediate-frequency range, and 0.083 or more in the high-frequency range, and these were satisfactory.

### [Comparative example 14]

The fiber layer J as the first fiber layer, the fiber layer K as the second fiber layer, and the porous layer β and the porous layer γ as the porous layers were used and overlapped to form the fiber layer J/the porous layer β/the fiber layer K/the porous layer γ, which was cut out into a circle having a diameter of 15 mm to prepare a sample for sound absorption coefficient measurement. When a sound absorption coefficient thereof was measured in the low-frequency range, the intermediate-frequency range, and the high-frequency range, a difference of the sound absorption coefficient compared to that of comparative example 1 was taken, and an improvement range was calculated, although the improvement range was 0.060 or more in the intermediate-frequency range and 0.072 or more in the high-frequency range and these were satisfactory, the improvement range in the low-frequency range was 0.002 or more and was poor.

The configurations of examples 25 to 31 and comparative example 14 are summarized in Table 13, the vertical incidence sound absorption coefficients are summarized in Table 14, and the improvement ranges of the sound absorption coefficient are summarized in Table 15.

**[Table 13]**

| | Example 25 | Example 26 | Example 27 | Example 28 | Example 29 | Example 30 | Example 31 | Comparative example 14 |
|---|---|---|---|---|---|---|---|---|
| First fiber layer | Fiber layer A | Fiber layer D | Fiber layer E | Fiber layer G | Fiber layer A | Fiber layer G | Fiber layer A | Fiber layer J |
| Fiber material | PVDF | PP | PP | PP | PVDF | PP | PVDF | PP |
| Fiber diameter (µm) | 0.08 | 5×40 | 5×40 | 15 | 0.08 | 15 | 0.08 | 15 |
| Basis weight (g/m²) | 0.2 | 25 | 35 | 100 | 0.2 | 100 | 0.2 | 25 |
| Density (kg/m³) | 200 | 227 | 250 | 227 | 200 | 227 | 200 | 147 |
| Thickness (mm) | 0.001 | 0.11 | 0.14 | 0.44 | 0.001 | 0.44 | 0.001 | 0.17 |
| Air permeability (cc/cm²·sec) | 47 | 138 | 70 | 56 | 47 | 56 | 47 | 280 |
| First porous laver | Porous layer β | Porous layer β | Porous layer β | Porous layer β | Porous layer ζ | Porous layer ζ | Porous laver η | Porous layer β |

| Material | PU foam material | PU foam material | PU foam material | PU foam material | PP/PE fiber | PP/PE fiber | Glass fiber | PU foam material |
|---|---|---|---|---|---|---|---|---|
| Density (kg/m³) | 25 | 25 | 25 | 25 | 42 | 42 | 16 | 25 |
| Thickness (mm) | 20 | 20 | 20 | 20 | 20 | 20 | 20 | 20 |
| Air permeability (cc/cm²·sec) | 70 | 70 | 70 | 70 | 150 | 150 | 170 | 70 |
| Second fiber layer | Fiber layer B | Fiber layer K | Fiber layer K | Fiber layer K | Fiber layer B | Fiber layer K | Fiber layer B | Fiber layer K |
| Material | PVDF | PP | PP | PP | PVDF | PP | PVDF | PP |
| Fiber diameter (µm) | 0.08 | 5×40 | 5×40 | 5×40 | 0.08 | 5×40 | 0.08 | 5×40 |
| Basis weight (g/m²) | 0.6 | 45 | 45 | 45 | 0.6 | 45 | 0.6 | 45 |
| Density (kg/m³) | 214 | 643 | 643 | 643 | 214 | 643 | 214 | 643 |
| Thickness (mm) | 0.0028 | 0.07 | 0.07 | 0.07 | 0.0028 | 0.07 | 0.0028 | 0.07 |
| Air permeability (cc/cm²·sec) | 10 | 14 | 14 | 14 | 10 | 14 | 10 | 14 |
| Second porous layer | Porous layer γ | Porous layer γ | Porous layer γ | Porous layer γ | Porous layer θ | Porous layer θ | Porous layer κ | Porous layer γ |

| Material | PU foam material | PU foam material | PU foam material | PU foam material | PP/PE fiber | PP/PE fiber | Glass fiber | PU foam material |
|---|---|---|---|---|---|---|---|---|
| Density (kg/m³) | 25 | 25 | 25 | 25 | 42 | 42 | 16 | 25 |
| Thickness (mm) | 5 | 5 | 5 | 5 | 5 | 5 | 5 | 5 |
| Air permeability (cc/cm2·sec) | 180 | 180 | 180 | 180 | 250 | 250 | 300 | 180 |

**[Table 14]**

| Vertical incidence sound absorption coefficient | Example 25 | Example 26 | Example 27 | Example 28 | Example 29 | Example 30 | Example 31 | Comparative example 14 |
|---|---|---|---|---|---|---|---|---|
| 500Hz | 0.311 | 0.230 | 0.287 | 0.262 | 0.295 | 0.308 | 0.228 | 0.207 |
| 630Hz | 0.395 | 0.305 | 0.353 | 0.351 | 0.368 | 0.374 | 0.288 | 0.245 |
| 800Hz | 0.509 | 0.403 | 0.415 | 0.470 | 0.470 | 0.491 | 0.376 | 0.306 |
| 1000Hz | 0.635 | 0.504 | 0.453 | 0.606 | 0.605 | 0.638 | 0.476 | 0.337 |
| 1600Hz | 0.810 | 0.766 | 0.887 | 0.781 | 0.876 | 0.908 | 0.728 | 0.574 |
| 2000Hz | 0.949 | 0.883 | 0.957 | 0.931 | 0.949 | 0.969 | 0.825 | 0.712 |
| 2500Hz | 0.972 | 0.935 | 0.964 | 0.965 | 0.981 | 0.991 | 0.893 | 0.822 |
| 5000Hz | 0.904 | 0.923 | 0.911 | 0.908 | 0.988 | 0.986 | 0.984 | 0.967 |
| 6300Hz | 0.943 | 0.970 | 0.944 | 0.961 | 0.976 | 0.987 | 0.984 | 0.994 |
| 8000Hz | 0.950 | 0.958 | 0.935 | 0.945 | 0.993 | 0.984 | 0.991 | 0.989 |
| 10000Hz | 0.946 | 0.974 | 0.964 | 0.962 | 0.997 | 0.990 | 0.995 | 0.983 |

**[Table 15]**

| Improvement range of sound absorption coefficient | Example 25 | Example 26 | Example 27 | Example 28 | Example 29 | Example 30 | Example 31 | Comparative example 14 |
|---|---|---|---|---|---|---|---|---|
| 500Hz | 0.142 | 0.061 | 0.118 | 0.093 | 0.059 | 0.072 | 0.068 | 0.038 |
| 630Hz | 0.193 | 0.103 | 0.151 | 0.148 | 0.071 | 0.077 | 0.070 | 0.043 |
| 800Hz | 0.252 | 0.146 | 0.158 | 0.212 | 0.095 | 0.116 | 0.111 | 0.049 |
| 1000Hz | 0.3 | 0.169 | 0.118 | 0.271 | 0.139 | 0.172 | 0.164 | 0.002 |
| Evaluation for low-frequency range | O | O | O | O | O | O | O | x |
| 1600Hz | 0.296 | 0.252 | 0.373 | 0.267 | 0.172 | 0.204 | 0.262 | 0.060 |
| 2000Hz | 0.322 | 0.256 | 0.330 | 0.305 | 0.149 | 0.169 | 0.283 | 0.085 |
| 2500Hz | 0.213 | 0.176 | 0.204 | 0.206 | 0.112 | 0.122 | 0.285 | 0.063 |
| Evaluation for intermediate-frequency range | O | O | O | O | O | O | O | O |
| 5000Hz | 0.145 | 0.164 | 0.151 | 0.148 | 0.034 | 0.032 | 0.133 | 0.208 |
| 6300Hz | 0.124 | 0.151 | 0.125 | 0.142 | 0.037 | 0.047 | 0.083 | 0.175 |
| 8000Hz | 0.048 | 0.056 | 0.034 | 0.044 | 0.046 | 0.037 | 0.145 | 0.087 |
| 10000Hz | 0.034 | 0.062 | 0.053 | 0.051 | 0.037 | 0.030 | 0.177 | 0.072 |
| Evaluation for high-frequency range | O | O | O | O | O | O | O | O |

### [Industrial Applicability]

Since the laminated sound absorbing material of the present invention is particularly excellent in sound absorbing property in the low-frequency range to the intermediate-frequency range, it can be utilized as a sound absorbing material in a field in which noise in the low-frequency range to the intermediate-frequency range is a problem. Specifically, the laminated sound absorbing material can be utilized as a sound absorbing material used for ceilings, walls, floors, or the like of houses, a soundproof wall for highways, railway lines, or the like, a soundproof material for home appliances, a sound absorbing material disposed in each part of vehicles such as railways and automobiles, and the like.

## Claims

1. A laminated sound absorbing material comprising at least a fiber layer and a porous layer, wherein
the fiber layer has a mean flow pore size of 1.0 to 60 µm,
the porous layer is a layer formed of at least one selected from the group consisting of a foamed resin, a nonwoven fabric, and a woven fabric, has a thickness of 3 to 40 mm, and a density of the porous layer is lower than a density of the fiber layer, and the density of the porous layer is 3 to 50 kg/m³
the fiber layer is disposed on a sound incidence side, and
the laminated sound absorbing material is **characterized in**:
an air permeability of the fiber layer is 56 to 220 cc/cm²·s by the Frazier method.

2. The laminated sound absorbing material according to claim 1, wherein
the fiber layer comprises a first fiber layer and a second fiber layer,
the first fiber layer and the second fiber layer have a same air permeability as each other, or the second fiber layer has a lower air permeability than the first fiber layer, and
the first fiber layer, the porous layer, and the second fiber layer are disposed in that order from an incidence side to a transmission side of sound.

3. The laminated sound absorbing material according to claim 2, wherein
the porous layer comprises a first porous layer and a second porous layer,
the first porous layer and the second porous layer have a same density as each other, or the second porous layer has a higher density than the first porous layer, and
the first fiber layer, the first porous layer, the second fiber layer, and the second porous layer are disposed in that order from an incidence side to a transmission side of sound.

4. The laminated sound absorbing material according to any one of claims 1 to 3, wherein the porous layer is a layer formed of at least a fiber of one type selected from a group consisting of a polyethylene phthalate fiber, a polybutylene terephthalate fiber, a polyethylene fiber, a polypropylene fiber, and a glass fiber, or formed of a nonwoven fabric or a woven fabric formed of a composite fiber in which two or more types thereof are composited.

5. The laminated sound absorbing material according to any one of claims 1 to 4, wherein the fiber layer includes at least a fiber of one type selected from a group consisting of polyvinylidene fluoride, nylon 6,6, polyacrylonitrile, polystyrene, polyurethane, polysulfone, polyvinyl alcohol, polyethylene phthalate, polybutylene terephthalate, polyethylene, and polypropylene.

## Patentansprüche

1. Laminiertes schallabsorbierendes Material, umfassend mindestens eine Faserschicht und eine poröse Schicht, wobei
die Faserschicht eine mittlere Durchflussporengröße von 1,0 bis 60 µm aufweist,
die poröse Schicht eine Schicht ist, die aus mindestens einem Material ausgewählt ist aus der Gruppe bestehend aus einem geschäumten Harz, einem Vliesstoff und einem Gewebe, und eine Dicke von 3 bis 40 mm aufweist und eine Dichte der porösen Schicht geringer ist als eine Dichte der Faserschicht, und die Dichte der porösen Schicht 3 bis 50 kg/m³ beträgt,
die Faserschicht auf einer Schall-Einfallsseite angeordnet ist, und
das laminierte schallabsorbierende Material **dadurch gekennzeichnet ist, dass**:
eine Luftdurchlässigkeit der Faserschicht nach dem Frazier-Verfahren 56 bis 220 cm/cm²·s beträgt.

2. Laminiertes schallabsorbierendes Material gemäß Anspruch 1, wobei
die Faserschicht eine erste Faserschicht und eine zweite Faserschicht umfasst,
die erste Faserschicht und die zweite Faserschicht die gleiche Luftdurchlässigkeit aufweisen oder die zweite Faserschicht eine geringere Luftdurchlässigkeit als die erste Faserschicht aufweist, und
die erste Faserschicht, die poröse Schicht und die zweite Faserschicht in dieser Reihenfolge von der Schall-Einfallsseite zu der Schall-Übertragungsseite angeordnet sind.

3. Laminiertes schallabsorbierendes Material gemäß Anspruch 2, wobei
die poröse Schicht eine erste poröse Schicht und eine zweite poröse Schicht umfasst,
die erste poröse Schicht und die zweite poröse Schicht eine gleiche Dichte aufweisen oder die zweite poröse Schicht eine höhere Dichte als die erste poröse Schicht aufweist, und
die erste Faserschicht, die erste poröse Schicht, die zweite Faserschicht und die zweite poröse Schicht in dieser Reihenfolge von einer Einfallsseite zu einer Übertragungsseite des Schalls angeordnet sind.

4. Laminiertes schallabsorbierendes Material gemäß einem der Ansprüche 1 bis 3, wobei die poröse Schicht eine Schicht ist, die aus mindestens einer Faser eines Typs gebildet ist, ausgewählt aus einer Gruppe bestehend aus einer Polyethylenphthalatfaser, einer Polybutylenterephthalatfaser, einer Polyethylenfaser, einer Polypropylenfaser und einer Glasfaser, oder aus einem Vliesstoff oder einem Gewebe gebildet ist, das aus einem Verbundfaserstoff gebildet ist, in dem zwei oder mehr davon zusammengesetzt sind.

5. Laminiertes schallabsorbierendes Material gemäß einem der Ansprüche 1 bis 4, wobei die Faserschicht mindestens eine Faser eines Typs enthält ausgewählt aus einer Gruppe bestehend aus Polyvinylidenfluorid, Nylon 6,6, Polyacrylnitril, Polystyrol, Polyurethan, Polysulfon, Polyvinylalkohol, Polyethylenphthalat, Polybutylenterephthalat, Polyethylen und Polypropylen.

## Revendications

1. Matériau absorbant acoustique stratifié comprenant au moins une couche de fibre et une couche poreuse, dans lequel
la couche de fibre a une taille de pore d'écoulement moyenne de 1,0 à 60 µm,
la couche poreuse est une couche formée d'au moins un choisi dans le groupe constitué par une résine fumée, un tissu non tissé et un tissu tissé, a une épaisseur de 3 à 40 mm et une densité de la couche poreuse est inférieure à une densité de la couche de fibre et la densité de la couche poreuse est de 3 à 50 kg/m³ la couche de fibre est disposée sur un côté d'incidence acoustique et
le matériau absorbant acoustique stratifié est **caractérisé par** :
une perméabilité à l'air de la couche de fibre est de 56 à 220 cc/cm²•s par le procédé de Frazier.

2. Matériau absorbant acoustique stratifié selon la revendication 1, dans lequel
la couche de fibre comprend une première couche de fibre et une seconde couche de fibre,
la première couche de fibre et la seconde couche de fibre ont une même perméabilité à l'air l'une l'autre ou la seconde couche de fibre a une perméabilité à l'air inférieure à la première couche de fibre et
la première couche de fibre, la couche poreuse et la seconde couche de fibre sont disposées dans cet ordre d'un côté d'incidence à un côté de transmission du son.

3. Matériau absorbant acoustique stratifié selon la revendication 2, dans lequel
la couche poreuse comprend une première couche poreuse et une seconde couche poreuse,
la première couche poreuse et la seconde couche poreuse ont une même densité l'une l'autre ou la seconde couche poreuse a une densité supérieure à la première couche poreuse et
la première couche de fibre, la première couche poreuse, la seconde couche de fibre et la seconde couche poreuse sont disposées dans cet ordre d'un côté d'incidence à un côté de transmission du son.

4. Matériau absorbant acoustique stratifié selon l'une quelconque des revendications 1 à 3, dans lequel la couche poreuse est une couche formée d'au moins une fibre d'un type choisi dans le groupe constitué par une fibre de phtalate de polyéthylène, une fibre de téréphtalate de polybutylène, une fibre de polyéthylène, une fibre de polypropylène et une fibre de verre ou formée d'un tissu non tissé ou d'un tissu tissé formé d'une fibre composite dans laquelle deux ou plus de deux de leurs types sont composés.

5. Matériau absorbant acoustique stratifié selon l'une quelconque des revendications 1 à 4, dans lequel la couche de fibre comprend au moins une fibre d'un type choisi dans un groupe constitué par le fluorure de polyvinylidène, le nylon 6,6, le polyacrylonitrile, le polystyrène, le polyuréthane, la polysulfone, l'alcool polyvinylique, le phtalate de polyéthylène, le téréphtalate de polybutylène, le polyéthylène et le polypropylène.
